# EUROPEAN PATENT SPECIFICATION

(11) **EP 3 886 032 B1**
(45) Date of publication and mention of the grant of the patent: **07.01.2026**
(21) Application number: 21158840.5
(22) Date of filing: 23.02.2021
(51) Int. Cl.: G06Q 30/0601, G06Q 20/20, G07G 1/00, G06Q 20/32

(54) **SHOPPING SUPPORT APPARATUS AND CONTROL METHOD THEREOF**
EINKAUFSUNTERSTÜTZUNGSGERÄT UND ZUGEHÖRIGER KONTROLLPROZESS
APPAREIL DE SUPPORT D'ACHAT ET PROCEDE DE CONTROLE ASSOCIE

(30) Priority: 24.03.2020 JP 2020053127
(43) Date of publication of application: 29.09.2021
(73) Proprietor: Toshiba Tec Kabushiki Kaisha, Shinagawa-ku Tokyo 141-8562 (JP)
(72) Inventor: Kawamoto, Tsuyoshi, Shinagawa-ku, Tokyo 141-8562 (JP)
(74) Representative: Bandpay & Greuter

(56) References cited:
- US-A1- 2014 207 570
- US-A1- 2014 214 599
- US-A1- 2019 251 619
- US-A1- 2020 082 457
- ANONYMOUS: "iBeacon - Wikipedia", 14 November 2019 (2019-11-14), pages 1 - 9, XP093228050, Retrieved from the Internet <URL:https://en.wikipedia.org/w/index.php?title=IBeacon&oldid=926213033>
- DICKINSON PATRICK ET AL: "Indoor positioning of shoppers using a network of Bluetooth Low Energy beacons", 2016 INTERNATIONAL CONFERENCE ON INDOOR POSITIONING AND INDOOR NAVIGATION (IPIN), IEEE, 4 October 2016 (2016-10-04), pages 1 - 8, XP033005677, [retrieved on 20161114], DOI: 10.1109/IPIN.2016.7743684

## Description

### FIELD

Embodiments described herein relate generally to a shopping support apparatus and a control method thereof.

### BACKGROUND

A shopping support system is already known in which a consumer purchases a commodity on a sales floor using a shopping support apparatus operated by themselves. The shopping support apparatus reads a commodity code for identifying the commodity being purchased and permits the consumer to register the items being a purchased by themselves.

With such shopping support system, the store typically lends a terminal that can read commodity codes to the consumer, and the consumer uses the loaned terminal as the shopping support apparatus. For example, the store mounts the terminal on a shopping cart and provides the shopping cart with the terminal mounted thereon to the consumer for use in the store.

However, in recent years, it has been considered that a communication terminal already individually owned by the consumer, such as a smartphone, can be used as the shopping support apparatus. By using individually owned communication terminals as the shopping support apparatus, the store has an advantage of saving on initial capital investment. The consumer may also have the advantage of having good operability because the consumer can register items by themselves at different stores by using the same communication terminal.

US patent publication 2020/082457 A1 (HAGEMANN CARSTEN [AU]) of 12 March 2020, discloses a system for displaying a shopping list for a shop identified by a QR code at the entrance.

When using an individually owned communication terminal as the shopping support apparatus, the consumer may create a list of planned purchase commodities (a "shopping list" or the like) in the communication terminal in advance. Accordingly, since the consumer can then shop and register items while confirming items against the list, the consumer will be less likely to forget to buy one of the items on the list of planned purchase commodities. Additionally, if the consumer can be notified of the store display location of the items on the shopping list of planned purchase commodities, consumer shopping convenience can be further improved.

### BRIEF DESCRIPTION OF THE DRAWINGS

FIG. 1 is a block diagram illustrating a schematic configuration of a shopping support system according to an embodiment.
FIG. 2 is a block diagram of a shopping support apparatus.
FIG. 3 is a schematic data structure of a store setting table.
FIG. 4 is a data structure of a shopping memo table.
FIG. 5 is a block diagram of a management server.
FIG. 6 is a schematic data structure of a store data file.
FIGs. 7 - 11 are flowcharts of information processing by a processor of a shopping support apparatus based upon execution of a shopping support program.
FIG. 12 is a flowchart of shopping memo command reception processing executed by a processor of a management server.
FIG. 13 is a schematic diagram illustrating an example of a check-in screen.
FIG. 14 is a schematic diagram illustrating an example of a camera screen.
FIG. 15 is a schematic diagram illustrating the example of the camera screen.
FIG. 16 is a schematic diagram illustrating an example of a wireless connection screen.
FIG. 17 is a schematic diagram illustrating an example of a check-in completion screen.
FIG. 18 is a schematic diagram illustrating an example of a commodity guide screen.
FIG. 19 is a schematic diagram illustrating another example of a commodity guide screen.
FIG. 20 is a schematic diagram illustrating an example of a registration screen.
FIG. 21 is a schematic diagram illustrating an example of a payment screen.
FIG. 22 is a schematic diagram illustrating an example of a check-out screen.

### DETAILED DESCRIPTION

At least one embodiment of the present invention provides a shopping support apparatus with which a consumer can register a purchased commodity by themselves and be notified of particular store locations of items on a shopping list or the like.

To solve the problem, there is provided a shopping support apparatus includes a storage for storing planned purchase commodity information and also a shopping support program useable at a plurality of different stores. Each store in the plurality having different setting information for the shopping support program. A camera of the shopping support apparatus is configured to acquire a store entrance code and setting information encoded in the store entrance code for a store. A processor of the shopping support apparatus is configured to execute the shopping support program according to the setting information acquired from decoding the store entrance code. The shopping support program provides a function guiding a customer to a sales location for a planned purchase commodity in the store. The planned purchase commodity is listed in the stored planned purchase commodity information.

Preferably, the processor is further configured to identify a current location of the shopping support apparatus in the store.

Preferably, the shopping support program guides to the sales location of the planned purchase commodity based on the current location of the shopping support apparatus.

Preferably, when the shopping support program is executed according to the setting information acquired from decoding the store entrance code, the shopping support program provides a notification that a planned purchase commodity is not presently available at the store.

Preferably, the setting information acquired from decoding the store entrance code includes a parameter for communicating with a server of the store.

Preferably, the processor is further configured to clear the setting information acquired from the store entrance code for the store after a store exit code for the store is acquired by the camera.

Preferably, the store entrance code is a two-dimensional code.

Preferably, the shopping support program provides mobile settlement.

The present invention also relates to a shopping support system to be provided at a plurality of different stores, the system comprising:
a store entrance code posted at an entrance of each store in a plurality of different stores, each store entrance code encoding different setting information for the respective store and the shopping support apparatus.

Preferably, the shopping support program provides mobile settlement for at least some of the plurality of different stores.

Preferably, the shopping support apparatus further includes a shopping list generation program configured to generate the planned purchase commodity information.

The present invention further relates to a non-transitory computer readable storage medium storing program instructions which when executed by a processor of a shopping support apparatus cause the shopping support apparatus to perform a method comprising:
acquiring a store entrance code and setting information encoded in the store entrance code for a store using a camera; and
executing a shopping support program according to the setting information acquired from decoding the store entrance code, and
guiding a customer to a sales location for a planned purchase commodity in the store, the planned purchase commodity being listed in planned purchase commodity information stored in the shopping support apparatus.

The method may further comprise identifying a current location of the shopping support apparatus in the store.

Preferably, the shopping support program guides to the sales location of the planned purchase commodity based on the current location of the shopping support apparatus.

Preferably, the shopping support program provides mobile settlement.

Preferably, the setting information acquired from decoding the store entrance code includes a parameter for communicating with a server of the store.

The method may further comprise clearing the setting information acquired from the store entrance code for the store after a store exit code for the store is acquired by the camera.

Hereinafter, example embodiments will be described with reference to the drawings.

The initial example embodiment describes a case in which a communication terminal, such as a smartphone, owned by a store customer can be used for the shopping support apparatus of a shopping support system that can be used at a plurality of different stores.

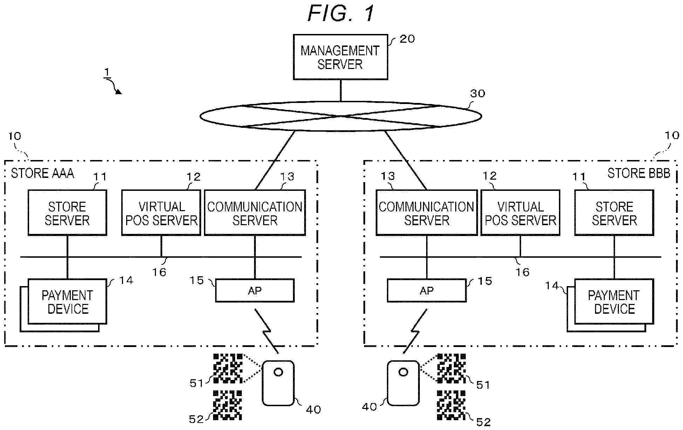

FIG. 1 is a block diagram illustrating a schematic configuration of a shopping support system 1 according to the present embodiment. The shopping support system 1 includes a plurality of store systems 10, a management server 20, a network 30, and at least one shopping support apparatus 40.

A store system 10 is configured at each store for which the shopping support system 1 has been introduced. The number of stores is not particularly limited. FIG. 1 illustrates a store system 10 configured for a store AAA and a store system 10 configured for a store BBB. The company that operates the store AAA may be the same as, or different from, the company that operates the store BBB.

A basic configuration of the store system 10 is common across different stores. That is, each store system 10 includes a store server 11, a virtual POS server 12, a communication server 13, at least one payment device 14, and an access point 15, which are connected to each other by a wired local area network (LAN) 16 or the like.

The store server 11 is a computer that supports all the operations of the store. In order to support all the operations thereof, the store server 11 manages various databases including a commodity database. The commodity database is a collection of commodity records describing data of each commodity sold in the store. This commodity database is sometimes referred to as a commodity master database. In the commodity database managed by the store server 11 of the store AAA, a separate commodity record related to each commodity type sold in the store AAA is stored. In the commodity database managed by the store server 11 of the store BBB, a separate commodity record related to each commodity type sold in the store BBB is stored. The commodity record comprises commodity data such as a commodity code, a price, a commodity name, and a sales position coordinate. The commodity code is a unique identification code set for each commodity type for individually identifying the different commodities by type at least. In some instances, each commodity may be uniquely identified by commodity code or the like. A barcode representing the commodity code is usually attached to each commodity. The sales position coordinate is information that specifies a sales place for the commodity in the store. In some examples, the sales place may be a shelf number, aisle number, a store section number, a department name, or the like. In the present embodiment, an XY coordinate system for the sales floor of the store is established and the sales position coordinate is coordinate (X,Y) on the sales floor.

The virtual POS server 12 is a computer that cooperates with the shopping support apparatus 40 to provide functions of a POS terminal for the shopping support apparatus 40 during operation. The virtual POS server 12 has a first function of registering sales data of the commodity identified by commodity code inputted via a shopping support apparatus 40 for each active shopping support apparatus 40 in the store. Unique identification information is set for each shopping support apparatus 40 in order to distinguish each shopping support apparatus 40 from the others. A second function of the virtual POS server 12 is generating a registration screen based upon the sales data for each commodity registered by a shopping support apparatus 40 and causing the generated registration screen to be displayed on a display device of the corresponding shopping support apparatus 40. A third function of the virtual POS server 12 is generating payment data based upon the registered commodity sales data and transmitting the generated payment data to the store server 11, when a payment is instructed from the shopping support apparatus 40.

The communication server 13 is a server for supporting data communication with the management server 20 via the network 30.

The payment device 14 is a terminal for performing settlement processing for the items being purchased by a customer. The payment device 14 acquires the payment data from the store server 11, and performs the settlement based upon the payment data. The settlement method is not particularly limited. The store system 10 can support settlement methods such as cash settlement, credit card settlement, electronic money settlement, rewards point settlement, and mobile device settlement.

The payment device 14 may also have a function of registering items for purchase. For example, when the barcode is read by a scanner connected to the payment device 14, the payment device 14 makes an inquiry to the store server 11 with the commodity code included in the barcode. In response to the inquiry, the store server 11 responds with the commodity data such as the commodity name and the price of the item identified by the commodity code, such that the payment device 14 can register the sales data for the item based upon the commodity data. Next, the payment device 14 performs the settlement processing for registered item(s). Alternatively, the payment device 14 adds the sales data of the item to the payment data acquired from the store server 11, thereby performing a settlement operation.

As payment device 14, there are so-called "manned payment devices" by which a clerk inputs information for settlement and "self-payment devices" by which the consumer himself or herself inputs information for settlement. The store system 10 may include both manned payment devices 14 and self-payment devices 14, or may include just manned payment devices 14 or just self-payment devices 14. A POS terminal of related arts can be utilized as a manned payment device 14. A self-type or semi-self-type payment device of related arts can be utilized as a self-payment device 14.

The access point 15 is a communication facility installed in the store as a relay base when each server of the store system 10 (e.g., the store server 11, the virtual POS server 12, and the communication server 13) performs data communication with the shopping support apparatus 40 via a wireless LAN. The wireless LAN complies with, for example, a Wi-Fi^{®} standard. FIG. 1 illustrates only one access point 15 in each store system 10, but the number of access points 15 in each store is not limited. A plurality of access points 15 may be connected to the wired LAN 16 depending on the scale of the store and the like.

In this example, the management server 20 is a cloud computing server that provides a service through a communication network such as the Internet. The management server 20 is connected to the communication server 13 of each store system 10 via the network 30. The network 30 is, for example, a wide area network (WAN) using a virtual private network (VPN). The management server 20 can also be connected to the shopping support apparatus 40 via the WAN such as the Internet or a mobile communication network. Thus, the management server 20 also has a function of relaying data communication between the shopping support apparatus 40 and the store system 10 which are in a connected state.

The shopping support apparatus 40 is a portable communication terminal. The shopping support apparatus 40 can be used by the consumer at any store using the shopping support system 1. The shopping support apparatus 40 includes hardware for reading at least a data code 51 and a data code 52 provided in a two-dimensional code system. For example, a commercially available smartphone or a tablet terminal with a digital camera can be used as the shopping support apparatus 40. In the present embodiment, a communication terminal already individually owned by the consumer is used as the shopping support apparatus 40.

The data code 51 and the data code 52 are prepared for each store in advance. The data code 51 and the data code 52 are placed where a consumer who visits the store can readily see the data code 51 and the data code 52. Specifically, the data code 51 is placed at an entrance of the store. The data code 52 is placed at an exit of the store. The data code 51 will be referred to as a entering code 51. The data code 52 will be referred to as exiting code 52.

Both the entering code 51 and the exiting code 52 are formed by encoding with a predetermined two-dimensional code system the setting information specific to a store or a company operating the store. In general, each item of the setting information is encoded regardless of the particular value of the setting for the store. Of course, information for each item may vary depending on the store.

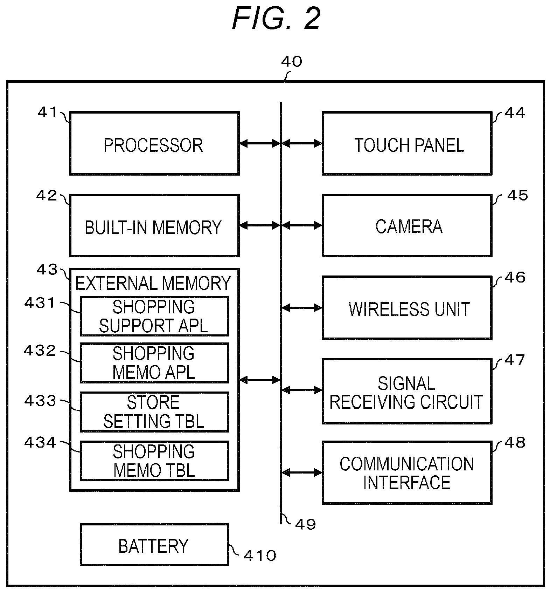

FIG. 2 is a block diagram illustrating a configuration of the shopping support apparatus 40. The shopping support apparatus 40 includes a processor 41, a built-in memory 42, an external memory 43, a touch panel 44, a camera 45, a wireless unit 46, a signal receiving circuit 47, a communication interface (I/F) 48, and a system transmission line 49. The shopping support apparatus 40 is mounted with a rechargeable battery 410 as a power source.

The system transmission line 49 includes an address bus, a data bus, and a control signal line. The shopping support apparatus 40 connects the processor 41, the built-in memory 42, the external memory 43, the touch panel 44, the camera 45, the wireless unit 46, the signal receiving circuit 47, and the communication interface 48 to the system transmission line 49. In the shopping support apparatus 40, a computer is configured by the processor 41, the built-in memory 42, the external memory 43, and the system transmission line 49 connecting the processor 41, the built-in memory 42, and the external memory 43.

The processor 41 corresponds to a central part of the computer. The processor 41 controls each unit to realize various functions as the shopping support apparatus 40 according to an operating system or an application program. The processor 41 is, for example, a central processing unit (CPU).

The built-in memory 42 includes a non-volatile memory area and a volatile memory area. The built-in memory 42 stores the operating system and/or the application program in the non-volatile memory area. The built-in memory 42 stores data necessary for the processor 41 to execute processing for controlling each unit in the volatile memory area. The built-in memory 42 uses the volatile memory area as a work area in which the data is appropriately rewritten by the processor 41. The non-volatile memory area is, for example, a read only memory (ROM). The volatile memory area is, for example, a random access memory (RAM).

The external memory 43 may be referred to as an auxiliary memory or auxiliary storage unit. For example, an SD memory card and a USB memory can be the external memory 43. The external memory 43 stores data to be used for the processor 41 to perform various processing or data generated by the processing of the processor 41. The external memory 43 may store the application program in some examples.

The touch panel 44 is a device combining both an input device and a display device of the shopping support apparatus 40. The touch panel 44 detects a touch position on the display screen corresponding to a displayed image or the like and outputs the touch position information to the processor 41.

The camera 45 is an imaging device built in the shopping support apparatus 40. The camera 45 can operate as an imaging device for a still image or a moving image, or as a scanning device for a data code such as a barcode and a two-dimensional code by the application program installed in the shopping support apparatus 40. The camera 45 is an example of a code reader.

The wireless unit 46 is a circuit for performing the data communication with the access point 15 according to a communication protocol of the wireless LAN.

The signal receiving circuit 47 is for receiving a beacon signal transmitted from a beacon transmitter. The beacon transmitter is a device that periodically transmits a signal referred to as a beacon using a short-range wireless technology such as Bluetooth^{®}. A beacon transmitters can be distributed around the store. A beacon signal including information for specifying each installation location of a corresponding beacon transmitter is continuously transmitted from each beacon transmitter. The processor 41 can recognize a current location of the shopping support apparatus 40 in the store based upon the information included in the beacon signal(s) received by the signal receiving circuit 47.

Here, the shopping support apparatus 40 is provided with a recognition unit for recognizing the current location thereof in the store by the beacon signal(s) received by the signal receiving circuit 47.

The communication interface 48 is a circuit for performing the data communication with the management server 20 connected via the Internet or the mobile communication network.

The shopping support apparatus 40 stores a shopping support program 431 ("shopping support APL") and a shopping memo program 432 ("shopping memo APL") in the external memory 43.

The shopping support program 431 is an application program for causing an individually owned communication terminal to function as the shopping support apparatus 40. By installing the shopping support program 431 in the communication terminal, the communication terminal can function as the shopping support apparatus 40. A store setting table 433 is formed in the external memory 43 by the shopping support program 431.

The shopping memo program 432 is an application program for causing the individually owned communication terminal to realize a shopping memo or shopping list function. By executing the shopping memo program 432, the communication terminal has a shopping memo function. A shopping memo table 434 is formed in the external memory 43 by the shopping memo program 432.

A method for installing a control program, such as the shopping support program 431 and the shopping memo program 432, in the external memory 43 is not particularly limited. The control program can be installed in the external memory 43 by recording the control program in a removable recording medium or by distributing the control program by communication via a network. The recording medium may have any form as long as the recording medium can store a program and the program can be read by an apparatus. The recording medium can be an SD memory card, a USB memory or the like. An installation destination of the control program is not limited to the external memory 43. The control program may be installed in the built-in memory 42.

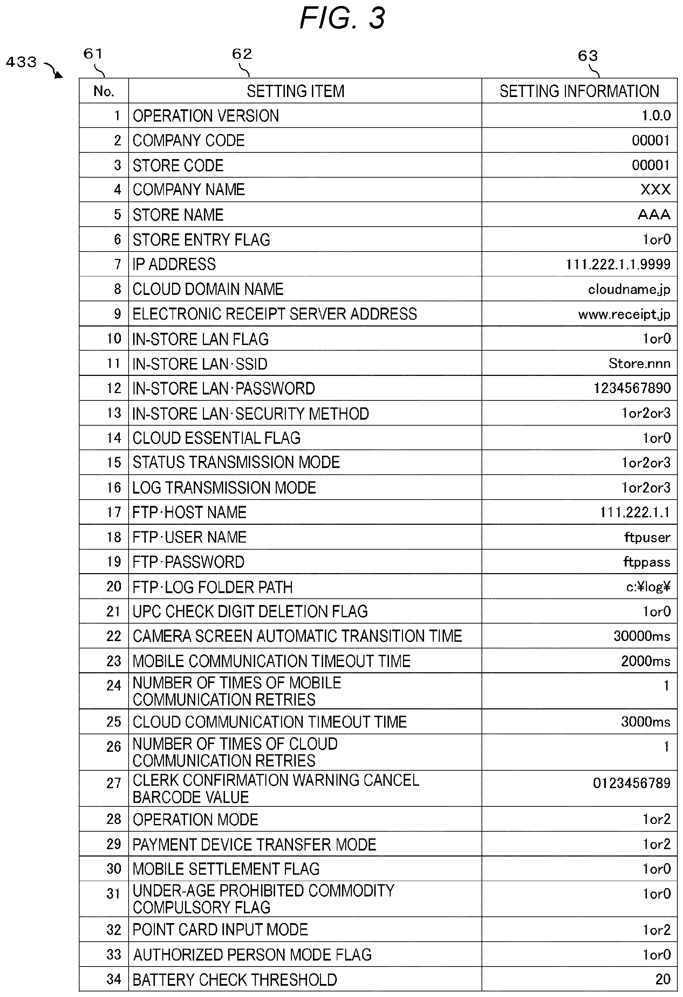

FIG. 3 is a schematic diagram illustrating a data structure of the store setting table 433. The store setting table 433 has a first field 61 indicating item number, a second field 62 indicating a setting item name, and a third field 63 indicating setting information values. In the first field 61, the items numbers from No. 1 to No. 34 are listed. In the second field 62, thirty-four different kinds of setting items are listed in association with the item numbers from No. 1 to No. 34, respectively. In the third field 63, particular data for the setting items associated with the items numbers from No. 1 to No. 34 is respectively listed. The data of for each of setting items can be included in the entering code 51 and the exiting code 52. When the entering code 51 is read by the camera 45 of the shopping support apparatus 40, the data of each setting item is populated in the third field 63 of the store setting table 433 of the shopping support apparatus 40.

The setting item corresponding to the item number No. 1 is an operation version. A latest version of a shopping support program 431 is encoded in the entering code 51 and the exiting code 52 of each store.

The setting item corresponding to the item number No. 2 is a company code. In the entering code 51 and the exiting code 52 for the store AAA, a company code for identifying a company that operates the store AAA is encoded. In the entering code 51 and the exiting code 52 for the store BBB, a company code for identifying a company that operates the store BBB is encoded.

The setting item corresponding to the item number No. 3 is a store code. In the entering code 51 and the exiting code 52 for the store AAA, a store code for identifying the store AAA is encoded. In the entering code 51 and the exiting code 52 for the store BBB, a store code for identifying the store BBB is encoded.

The setting item corresponding to the item number No. 4 is a company name. In the entering code 51 and the exiting code 52 for the store AAA, a name of a company that operates the store AAA is encoded. In the entering code 51 and the exiting code 52 for the store BBB, a name of a company that operates the store BBB is encoded.

The setting item corresponding to the item number No. 5 is a store name. In the entering code 51 and the exiting code 52 for the store AAA, a name of the store AAA is encoded. In the entering code 51 and the exiting code 52 for the store BBB, a name of the store BBB is encoded.

As described above, in the third field 63 of the setting information corresponding to the item numbers from No. 2 to No. 5 of the store setting table 433, information is provided for identifying a store where a consumer performs the shopping using the shopping support apparatus 40. That is, the entering code 51 and the exiting code 52 include the information for identifying the store where the consumer will be using the shopping support apparatus 40. Such information can be information unique to each store.

The setting item corresponding to the item number No. 6 is a store entry flag. The store entry flag is 1-bit data for identifying the values of the store entry flag for the entering code 51 or the exiting code 52. In the embodiment, "1" is encoded as the store entry flag in the entering code 51 and "0" is encoded as the store entry flag in the exiting code 52.

The setting item corresponding to the item number No. 7 is an IP address. In the entering code 51 and the exiting code 52 for the store AAA, an IP address of the communication server 13 provided in the store AAA is encoded. In the entering code 51 and the exiting code 52 for the store BBB, an IP address of the communication server 13 provided in the store BBB is encoded.

The setting item corresponding to the item number No. 8 is a cloud domain name. A domain name of the management server 20 is encoded in any one of the entering code 51 and the exiting code 52 of each store.

The setting item corresponding to the item number No. 9 is an electronic receipt server address. An electronic receipt server is a server specialized in a service of providing an electronic receipt obtained by digitizing a receipt to a terminal of a consumer. In the entering code 51 and the exiting code 52 for the store AAA, a network address of the electronic receipt server used by the store AAA is encoded. In the entering code 51 and the exiting code 52 for the store BBB, a network address of the electronic receipt server used by the store BBB is encoded.

The setting item corresponding to the item number No. 10 is an in-store LAN flag. The in-store LAN flag is 1-bit data for identifying whether a wireless LAN in the store is used as a communication medium between the shopping support apparatus 40 and the store system 10. Hereinafter, the wireless LAN in the store will be referred to as an in-store LAN. According to the embodiment, in the entering code 51 and the exiting code 52 of a store that uses the in-store LAN as the communication medium between the shopping support apparatus 40 and the store system 10, "1" is encoded as the in-store LAN flag. In the entering code 51 and the exiting code 52 of a store that does not use the in-store LAN, "0" is encoded as the in-store LAN flag.

The setting item corresponding to the item number No. 11 is an in-store LAN·SSID. In the entering code 51 and the exiting code 52 for the store AAA, a service set identifier (SSID), which is an identification name of the access point 15 provided in the store AAA, is encoded. In the entering code 51 and the exiting code 52 for the store BBB, an SSID of the access point 15 provided in the store BBB is encoded.

The setting item corresponding to the item number No. 12 is an in-store LAN·password. In the entering code 51 and the exiting code 52 for the store AAA, a password set in the in-store LAN of the store AAA is encoded. In the entering code 51 and the exiting code 52 for the store BBB, a password set in the in-store LAN of the store BBB is encoded.

The setting item corresponding to the item number No. 13 is an in-store LAN·security method. In the entering code 51 and the exiting code 52 for the store AAA, data indicating an encryption key of a security method (WPA2-PSK, WPA-PSK, and WEP) set in the in-store LAN of the store AAA is encoded. In the entering code 51 and the exiting code 52 for the store BBB, data indicating an encryption key of a security method set in the in-store LAN of the store BBB is encoded.

The setting item corresponding to the item number No. 14 is a cloud essential flag. The cloud essential flag is 1-bit data for identifying whether an error is notified when the shopping support apparatus 40 fails to be connected to the management server 20, or whether the shopping support apparatus 40 is continuously used without notifying the error. According to the embodiment, in the entering code 51 and the exiting code 52 which are provided in a store where the error is notified, "1" is encoded as the cloud essential flag. In the entering code 51 and the exiting code 52 which are provided in a store where the shopping support apparatus 40 is continuously used, "0" is encoded as the cloud essential flag.

The setting item corresponding to the item number No. 15 is a status transmission mode. The status transmission modes include a first mode in which a status of the shopping support apparatus 40 is transmitted to the management server 20; a second mode in which the status thereof is transmitted to the store system 10; and a third mode in which the status thereof is not transmitted. In the entering code 51 and the exiting code 52 of a store that adopts the first mode, "1" is encoded as the status transmission mode. In the entering code 51 and the exiting code 52 of a store that adopts the second mode, "2" is encoded as the status transmission mode. In the entering code 51 and the exiting code 52 of a store that adopts the third mode, "3" is encoded as the status transmission mode.

The setting item corresponding to the item number No. 16 is a log transmission mode. The log transmission mode includes a first mode in which a log file storing log data of the shopping support apparatus 40 is transmitted only to the management server 20; a second mode in which the log file is transmitted only to the store system 10; a third mode in which the log file is transmitted to both the management server 20 and the store system 10; and a fourth mode in which the log file is not transmitted. In the entering code 51 and the exiting code 52 of a store that adopts the first mode, "1" is encoded as the log transmission mode. In the entering code 51 and the exiting code 52 of a store that adopts the second mode, "2" is encoded as the log transmission mode. In the entering code 51 and the exiting code 52 of a store that adopts the third mode, "3" is encoded as the log transmission mode. In the entering code 51 and the exiting code 52 of a store that adopts the fourth mode, "4" is encoded as the log transmission mode.

The setting item corresponding to the item number No. 17 is an FTP·host name. When the log transmission mode is the first mode or the third mode, the log file is transmitted to the management server 20 via the Internet. In the entering code 51 and the exiting code 52, a host name or an IP address of a protocol used when the log file is transmitted to the management server 20 is encoded.

The setting item corresponding to the item number No. 18 is an FTP·user name. In the entering code 51 and the exiting code 52, a user name of the protocol used when the log file is transmitted to the management server 20 is encoded.

The setting item corresponding to the item number No. 19 is an FTP·password. In the entering code 51 and the exiting code 52, a password of the protocol used when the log file is transmitted to the management server 20 is encoded.

The setting item corresponding to the item number No. 20 is an FTP·log folder path. In the entering code 51 and the exiting code 52, a path name of the log file to be transmitted to the management server 20 via the Internet is encoded.

As described above, in the third field 63 of the setting information corresponding to the item numbers from No. 7 to No. 20 of the store setting table 433, a parameter required for the shopping support apparatus 40 to perform communication is set. That is, the entering code 51 and the exiting code 52 include the parameter required for the shopping support apparatus 40 to perform the communication. Such kind of parameter is setting information unique to a store.

The setting item corresponding to the item number No. 21 is a UPC check digit deletion flag. The UPC check digit deletion flag is 1-bit data for identifying whether to delete a check digit of a universal product code (UPC) which is a kind of commodity code. According to the embodiment, in the entering code 51 and the exiting code 52 of a store where the check digit is deleted, "1" is encoded as the UPC check digit deletion flag. In the entering code 51 and the exiting code 52 of a store where the check digit is not deleted, "0" is encoded as the UPC check digit deletion flag.

The setting item corresponding to the item number No. 22 is a camera automatic transition time. An automatic transition time of the camera 45 provided in the shopping support apparatus 40 is set for each store. That is, in the entering code 51 and the exiting code 52 for the store AAA, a camera automatic transition time set for the store AAA is encoded. In the entering code 51 and the exiting code 52 for the store BBB, a camera automatic transition time set for the store BBB is encoded.

The setting item corresponding to the item number No. 23 is a mobile communication timeout time. A timeout time when the shopping support apparatus 40 communicates with the store system 10 via the wireless LAN is set for each store. That is, in the entering code 51 and the exiting code 52 for the store AAA, a mobile communication timeout time set for the store AAA is encoded. In the entering code 51 and the exiting code 52 for the store BBB, a mobile communication timeout time set for the store BBB is encoded.

The setting item corresponding to the item number No. 24 is the number of times of mobile communication retries. The number of times of retries when the shopping support apparatus 40 times out when communicating with the store system 10 via the wireless LAN is set for each store. That is, in the entering code 51 and the exiting code 52 for the store AAA, the number of times of mobile communication retries set for the store AAA is encoded. In the entering code 51 and the exiting code 52 for the store BBB, the number of times of mobile communication retries set for the store BBB is encoded.

The setting item corresponding to the item number No. 25 is a cloud communication timeout time. A timeout time when the shopping support apparatus 40 communicates with the store system 10 via the management server 20 is set for each store. That is, in the entering code 51 and the exiting code 52 for the store AAA, a cloud communication timeout time set for the store AAA is encoded. In the entering code 51 and the exiting code 52 for the store BBB, a cloud communication timeout time set for the store BBB is encoded.

The setting item corresponding to the item number No. 26 is the number of times of cloud communication retries. The number of times of retries when the shopping support apparatus 40 times out when communicating with the store system 10 via the management server 20 is set for each store. That is, in the entering code 51 and the exiting code 52 for the store AAA, the number of times of cloud communication retries set for the store AAA is encoded. In the entering code 51 and the exiting code 52 for the store BBB, the number of times of cloud communication retries set for the store BBB is encoded.

The setting item corresponding to the item number No. 27 is a clerk confirmation warning cancel barcode value. For example, when a consumer purchases under-age prohibited commodities such as an alcoholic beverage and a cigarette, confirmation by a clerk is required. The clerk who confirms the age of the consumer causes the shopping support apparatus 40 to read a clerk confirmation warning cancel barcode dedicated to the store. In the entering code 51 and the exiting code 52 for the store AAA, a value of the clerk confirmation warning cancel barcode used by a clerk of the store AAA is encoded. In the entering code 51 and the exiting code 52 for the store BBB, a value of the clerk confirmation warning cancel barcode used by a clerk of the store BBB is encoded.

The setting item corresponding to the item number No. 28 is an operation mode. The operation mode includes a normal mode in which the shopping support system is normally operated and a demonstration mode in which the shopping support system is operated as a demonstration. In the entering code 51 and the exiting code 52 which are used in the normal mode, "1" is encoded as the operating mode. In the entering code 51 and the exiting code 52 which are used in the demonstration mode, "0" is encoded as the operating mode.

The setting item corresponding to the item number No. 29 is a payment device transfer mode. In the store system 10, sales data of the purchased commodity obtained by allowing the consumer to read the commodity code by using the shopping support apparatus 40 is registered in the virtual POS server 12. When the consumer instructs payment of the purchased commodity from the shopping support apparatus 40, payment data generated based upon the sales data of the purchased commodity registered in the virtual POS server 12 is transferred to the payment device 14 via the store server 11. Here, as a method of transferring the payment data to the payment device 14, there is a method of using a payment barcode associated with the payment data and a method of not using the payment barcode. In the entering code 51 and the exiting code 52 of a store where the method of using the payment barcode is adopted, "1" is encoded as the payment device transfer mode. In the entering code 51 and the exiting code 52 of a store where the method of not using the payment barcode is adopted, "0" is encoded as the payment device transfer mode.

The setting item corresponding to the item number No. 30 is a mobile settlement flag. Mobile settlement is one of the possible settlement methods for the purchased commodity. The mobile settlement is a method in which the shopping support apparatus 40 is used and the price of the commodity is electronically paid by using a barcode or a two-dimensional code. The mobile settlement flag is 1-bit data for identifying whether to adopt the mobile settlement. According to the embodiment, in the entering code 51 and the exiting code 52 of a store where the mobile settlement is adopted, "1" is encoded as the mobile settlement flag. In the entering code 51 and the exiting code 52 of a store where the mobile settlement is not adopted, "0" is encoded as the mobile settlement flag.

The setting item corresponding to the item number No. 31 is an under-age prohibited commodity compulsory flag. A store determines whether to permit registration of an age-limited commodity such as an alcoholic beverage and a cigarette, so-called the under-age prohibited commodities in the shopping support apparatus 40. The under-age prohibited commodity compulsory flag is 1-bit data for identifying whether to permit the registration of the under-age prohibited commodities in the shopping support apparatus 40. According to the embodiment, in the entering code 51 and the exiting code 52 of a store that permits the registration of the under-age prohibited commodities in the shopping support apparatus 40, "1" is encoded as the under-age prohibited commodity compulsory flag. In the entering code 51 and the exiting code 52 of a store that does not permit the registration of the under-age prohibited commodities in the shopping support apparatus 40, "0" is encoded as the under-age prohibited commodity compulsory flag.

The setting item corresponding to the item number No. 32 is a point card input mode. The point card input mode includes a first mode in which a card number of a point card is manually inputted, and a second mode in which a data code printed on a card is inputted by allowing the camera 45 to read the data code. In the entering code 51 and the exiting code 52 of a store where the first mode is adopted, "1" is encoded as the point card input mode. In the entering code 51 and the exiting code 52 of a store where the second mode is adopted, "2" is encoded as the point card input mode.

The setting item corresponding to the item number No. 33 is an authorized person mode flag. For example, the work of inputting the card number of a point cards is not performed by the consumer, but rather the work is performed by an authorized person in the store. Therefore, the shopping support apparatus 40 includes, as a control mode, a first mode for shopping support in the store and a second mode for the work restricted to an authorized store person. The authorized person mode flag is 1-bit data for identifying whether the control mode is set to the first mode or the second mode. In the embodiment, in a data code in which the control mode is set to the first mode, that is, in the entering code 51 and the exiting code 52, "0" is encoded as the authorized person mode flag. In the embodiment, in a data code in which the control mode is set to the second mode, "1" is encoded as the authorized person mode flag.

The setting item corresponding to the item number No. 34 is a battery check threshold. A threshold of battery capacity is set for each store or company so that the shopping support apparatus 40 does not run out of battery during shopping. That is, in the entering code 51 and the exiting code 52 for the store AAA, a battery check threshold set by the store AAA is encoded. In the entering code 51 and the exiting code 52 for the store BBB, a battery check threshold set by the store BBB is encoded.

As such, in the third field 63 corresponding to the item numbers from No. 22 to No. 34 of the store setting table 433, an operation restriction information in a store when the shopping support apparatus 40 is used in the store is set. That is, the entering code 51 and the exiting code 52 include the operation restriction information in a store when the shopping support apparatus 40 is used in the store. The operation restriction information is setting information unique to the store.

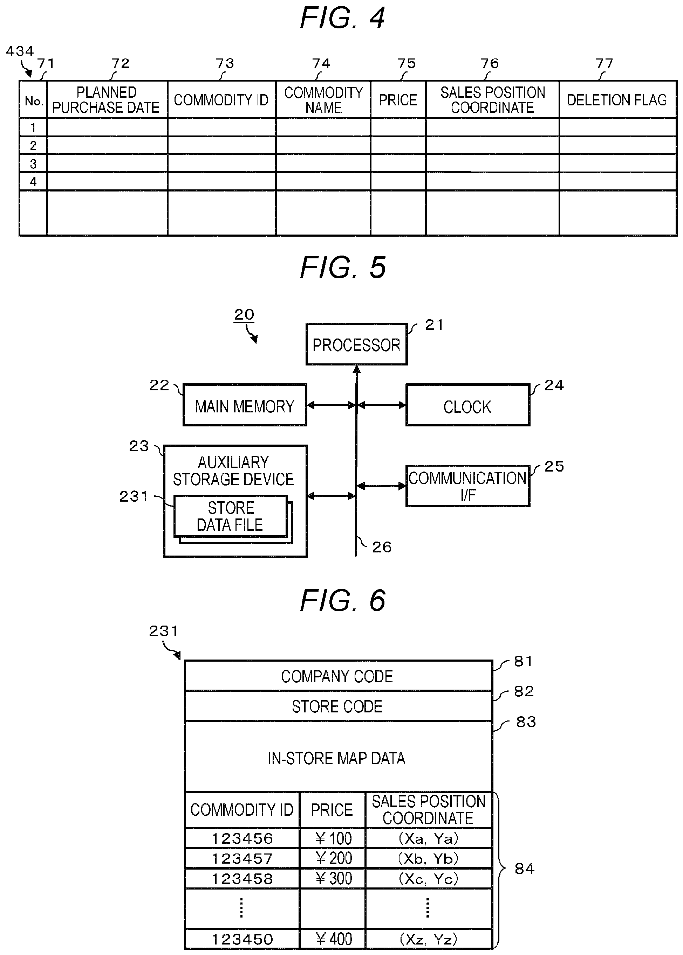

FIG. 4 is a block diagram illustrating a data structure of the shopping memo table 434. The shopping memo table 434 includes a first field 71 indicating an index number, a second field 72 indicating a planned purchase date, a third field 73 indicating a commodity code, a fourth field 74 indicating a commodity name, a fifth field 75 indicating a price, a sixth field 76 indicating a sales position coordinate, and a seventh field 77 indicating a deletion flag. The shopping memo table 434 may have other fields.

When starting the shopping memo program 432 of the shopping support apparatus 40, the consumer can generate a shopping memo by using the Internet. Specifically, when the shopping memo program 432 is started, the shopping support apparatus 40 can access a shopping memo site via the Internet. Therefore, the consumer operates the touch panel 44 to select a planned purchase commodity from a commodity list provided by the site. The consumer registers a planned purchase date of the planned purchase commodity in the shopping support apparatus 40. By the above-described operation, the planned purchase date, the commodity code, and the commodity name of the planned purchase commodity are registered in the order of the index numbers in the first field 71 to the fourth field 74 of the shopping memo table 434. Here, at this point of time, the deletion flag of the seventh field 77 is reset to "0". Both the price of the fifth field 75 and the sales position coordinate of the sixth field 76 are NULL. Hereinafter, the combined data of the planned purchase date, the commodity code, the commodity name, the deletion flag, and the sales position coordinate correlated with an index number will be referred to as a planned purchase record. The processor 41 of the shopping support apparatus 40 does not delete the planned purchase record whose deletion flag is reset to "0" from the shopping memo table 434. The processor 41 deletes the planned purchase record whose deletion flag is set to "1" from the shopping memo table 434.

Here, the shopping support apparatus 40 forms a storage unit that stores the data of the planned purchase commodity by the shopping memo table 434.

FIG. 5 is a block diagram of the management server 20. The management server 20 includes a processor 21, a main memory 22, an auxiliary storage device 23, a clock 24, a communication interface 25, and a system transmission line 26. The system transmission line 26 includes an address bus, a data bus, and a control signal line. The management server 20 connects the processor 21, the main memory 22, the auxiliary storage device 23, the clock 24, and the communication interface 25 to the system transmission line 26. In the management server 20, a computer is configured by the processor 21, the main memory 22, the auxiliary storage device 23, and the system transmission line 26 that connects the processor 21, the main memory 22, and the auxiliary storage device 23.

The processor 21 corresponds to a central part of the computer. The processor 21 controls each unit to realize various functions as the management server 20 according to an operating system or an application program. The processor 21 is, for example, a CPU.

The main memory 22 includes a non-volatile memory area and a volatile memory area. The main memory 22 stores the operating system or the application program in the non-volatile memory area. The main memory 22 stores data necessary for the processor 21 to execute processing for controlling each unit in the volatile memory area. The above -described data may be also stored in the non-volatile memory area. The main memory 22 uses the volatile memory area as a work area in which the data can be appropriately rewritten by the processor 21. The non-volatile memory area is, for example, a ROM. The volatile memory area is, for example, a RAM.

An EEPROM, an HDD, or an SSD can be the auxiliary storage device 23. The auxiliary storage device 23 stores data to be used for the processor 21 to perform various processing, or data generated by the processing of the processor 21. The auxiliary storage device 23 may also store the application program.

An application program stored in the main memory 22 or the auxiliary storage device 23 includes a control program providing information processing as described above as being executed by the management server 20. A method for installing the control program in the main memory 22 or the auxiliary storage device 23 is not particularly limited.

The clock 24 tracks date and time. The management server 20 acquires the date and time tracked by the clock 24 as a current date and time.

The communication interface 25 is a circuit for transmitting and receiving data to and from the communication server 13 of each store system 10 connected via the network 30 according to a predetermined communication protocol.

The management server 20 having the above-described configuration stores store data file 231 in the auxiliary storage device 23. The store data file 231 is prepared for each store. A storage destination of the store data file 231 is not limited to the auxiliary storage device 23. The auxiliary storage device 23 may be stored in the volatile memory area of the main memory 22.

FIG. 6 is a schematic diagram illustrating a data structure of the store data file 231. The store data file 231 includes an area 81 for describing a company code, an area 82 for describing a store code, an area 83 for describing in-store map data, and an area 84 for describing a plurality of commodity data. In the area 81 and the area 82, the company code of a company that operates a store and the store code of the store are described. That is, in the store data file 231 for the store AAA, a company code of a company that operates the store AAA and a store code of the store AAA are described in the area 81 and the area 82. In the store data file 231 for the store BBB, a company code of a company that operates the store BBB and a store code of the store BBB are described in the area 81 and the area 82.

In the area 83, data of an in-store map image in which a layout of a commodity display shelf, a cash register, and a service counter arranged in the store is imaged is described. That is, an in-store map image of the store AAA is described in the store data file 231 for the store AAA. An in-store map image of the store BBB is described in the store data file 231 for the store BBB.

In the area 84, a commodity code, a price, and a sales position coordinate of a commodity being sold in the store are described. That is, in the store data file 231 for the store AAA, a commodity code, a price, and a sales position coordinate of all the commodities sold in the store AAA are described. In the store data file 231 for the store BBB, a commodity code, a price, and a sales position coordinate of all the commodities sold in the store BBB are described.

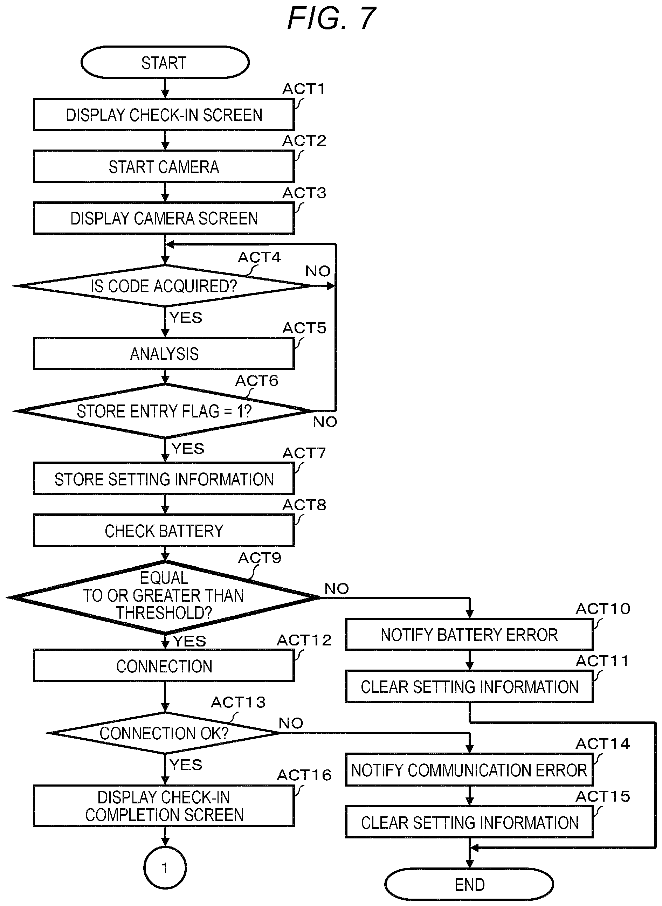

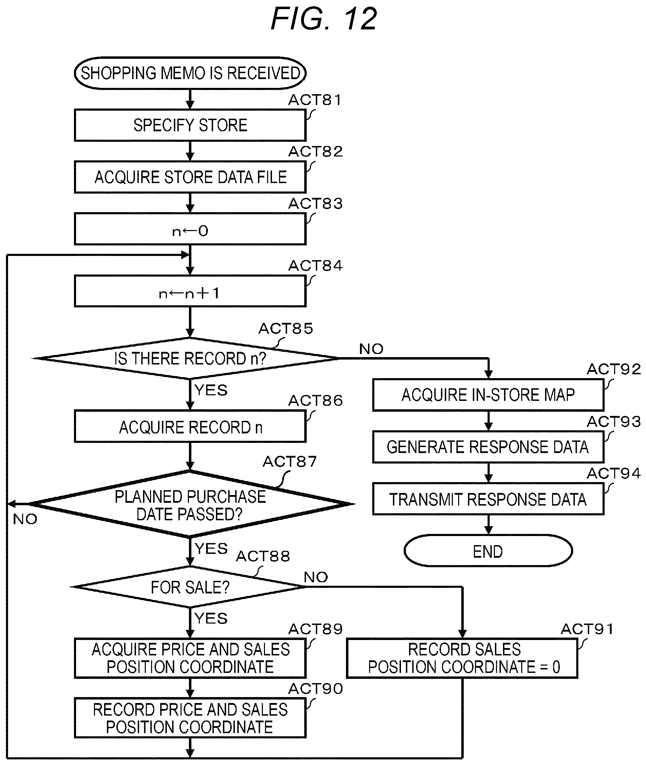

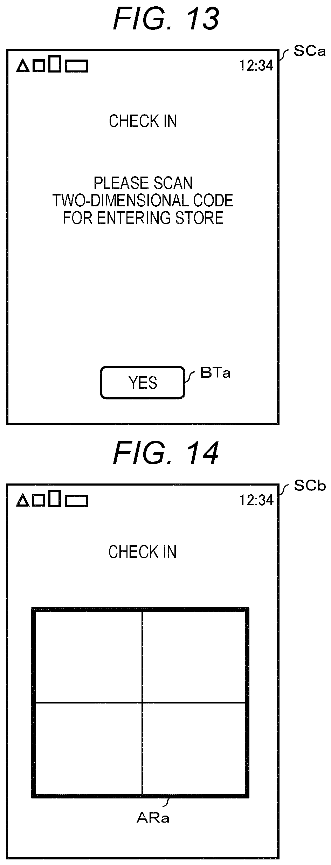

FIGS. 7 to 11 are flowcharts illustrating information processing by the processor 41 of the shopping support apparatus 40 executed based upon the shopping support program 431. FIG. 12 is a flowchart of reception processing by the processor 21 of the management server 20 executed in response to receiving a shopping memo command from the shopping support apparatus 40. FIGS. 13 to 22 are schematic diagrams illustrating an example of various screens displayed on the touch panel 44 of the shopping support apparatus 40. Hereinafter, a shopping support operation of the shopping support system 1 will be described with reference to these drawings. A content of the shopping support operation described below is only an example. In general, the operation procedure and content are not particularly limited as long substantially similar results as those described below can be obtained.

First, a consumer uses the shopping memo program 432 of the shopping support apparatus 40 to register a list of planned purchase commodities (a "shopping list") in the shopping memo table 434 before going to a store where the shopping support system 1 has been introduced. Here, the consumer who goes to the store where the shopping support system 1 has been introduced starts the shopping support program 431 of the shopping support apparatus 40. Accordingly, the processor 41 starts the information processing of the procedure illustrated in the flowcharts of FIGS. 7 to 11.

When the shopping support program 431 is started, the processor 41 displays a check-in screen SCa (refer to FIG. 13) on the touch panel 44 as ACT 1.

FIG. 13 is an example of the check-in screen SCa. As illustrated in the drawing, a message for instructing scanning of a two-dimensional code for entering the store (a "entering code") and an image of a "yes" button BTa for instructing that the consumer confirms the message are displayed on the check-in screen SCa. The consumer or the clerk who confirms the check-in screen SCa touches the "yes" button BTa.

When detecting that the "yes" button BTa of the check-in screen SCa is touched by a signal from the touch panel 44, the processor 41 starts the camera 45 as ACT 2. Next, the processor 41 displays a camera screen SCb (refer to FIG. 14) on the touch panel 44 as ACT 3.

FIG. 14 is an example of the camera screen SCb. As illustrated in the drawing, an image illustrating a reading area ARa of the two-dimensional code is displayed on the camera screen SCb. The consumer who confirms the camera screen SCb holds the lens of the camera 45 built in the shopping support apparatus 40 over the entering code 51 so that the entering code 51 at the entrance of the store fits within the reading area ARa.

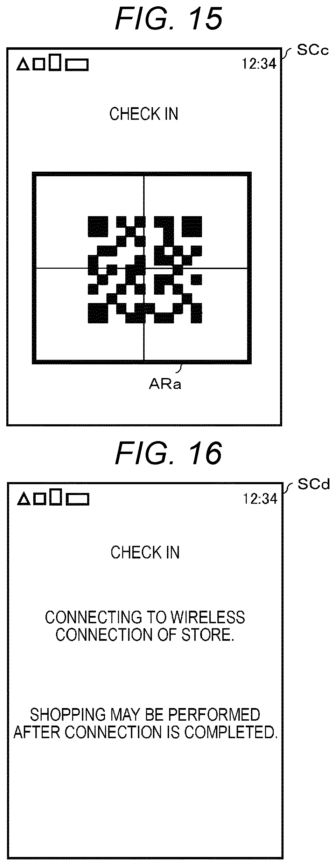

The processor 41 displaying the camera screen SCb waits for the camera 45 to read a data code of a two-dimensional code system as ACT 4. As illustrated in FIG. 15, when the data code of the two-dimensional code system fits within the reading area ARa, the processor 41 determines that the data code is read. The processor 41 determines YES in ACT 4, and proceeds to ACT 5.

The processor 41 analyzes data encoded by the data code from an image of the data code imaged by the camera 45 as ACT 5. Next, as ACT 6, the processor 41 confirms whether the data code read by the camera 45 is a data code whose store entry flag is "1". When the consumer reads the entering code 51, the processor 41 determines YES in ACT 6 because the store entry flag is "1". However, when the consumer reads the exiting code 52, the processor 41 determines NO in ACT 6 because the store entry flag is "0".

When the processor 41 determines NO in ACT 6, the processor 41 returns to ACT 4. That is, the processor 41 waits for the camera 45 to read the data code of the two-dimensional code system.

When the processor 41 determines YES in ACT 6, the processor 41 proceeds to ACT 7. As ACT 7, the processor 41 describes data obtained by analyzing the entering code 51, that is, the setting information of the setting items respectively corresponding to the item numbers from No. 1 to No. 34 in the third field 63 of the store setting table 433.

Here, the processor 41 configures an acquisition unit by executing the processing of ACT 1 to ACT 7 in cooperation with the camera 45. That is, the processor 41 receives a store entry operation to a store and acquires setting information unique to the store. Next, the processor 41 stores the setting information unique to the store in the store setting table 433.

As ACT 8, the processor 41 acquires data of the third field 63 with respect to the setting item "the battery check threshold" of the item number No. 34, that is, the battery check threshold. Next, the processor 41 confirms whether a remaining capacity of the battery 410 mounted on the shopping support apparatus 40 is equal to or greater than the battery check threshold as ACT 9.

When the remaining capacity of the battery 410 is less than the battery check threshold, the processor 41 determines NO in ACT 9, and proceeds to ACT 10. The processor 41 notifies a battery error as ACT 10. For example, the processor 41 causes the touch panel 44 to display a message indicating that "The battery capacity is insufficient. Please charge the battery because the battery may run out during shopping.", thereby notifying that the remaining capacity of the battery 410 is insufficient. After the notification, the processor 41 clears the setting information described in the third field 63 of the store setting table 433 as ACT 11. Next, the processor 41 ends the information processing.

Therefore, the shopping support apparatus 40 whose remaining capacity of the battery 410 is less than the battery check threshold cannot be used. Here, the consumer may charge the shopping support apparatus 40 or connect an external battery thereto and start the shopping support program 431 again.

When the remaining capacity of the battery 410 is equal to or greater than the battery check threshold, the processor 41 determines YES in ACT 9, and proceeds to ACT 12. As ACT 12, the processor 41 controls the wireless unit 46 according to various data of the setting items "in-store LAN·SSID", "in-store LAN·password", and "in-store LAN·security method" correlated with the item numbers from No. 11 to No. 13 of the store setting table 433, and tries to be connected to the in-store LAN. Here, the processor 41 displays a wireless connection screen SCd (refer to FIG. 16) on the touch panel 44.

FIG. 16 is an example of the wireless connection screen SCd. As illustrated in the drawing, the wireless connection screen SCd displays a message indicating that the shopping support apparatus 40 is trying to be connected to the in-store LAN, and that shopping may be performed after the connection is completed. Therefore, the shopper waits for the shopping support apparatus 40 to be connected to the in-store LAN.

Referring back to the description of FIG. 7, as ACT 13, the processor 41 waits for the shopping support apparatus 40 to be connected to the in-store LAN. Here, when the shopping support apparatus 40 is not connected to the in-store LAN even after the time corresponding to the setting information of the setting item "mobile communication timeout time" correlated with the item number No. 23 elapses, the processor 41 repeats the retry by the number of times corresponding to the setting information of the setting item "the number of times of mobile communication retries" correlated with the item number No. 24. When the shopping support apparatus 40 is not connected to the in-store LAN even after the retry is repeated by the number of times of mobile communication retries, the processor 41 determines NO in ACT 22, and proceeds to ACT 14. The processor 41 notifies a communication error as ACT 14. For example, the processor 41 causes the touch panel 44 to display a message indicating that "Communication error occurred. Please try after a while.", thereby notifying that the shopping support apparatus 40 cannot be connected to the in-store LAN. After the notification, the processor 41 clears the setting information described in the third field 63 of the store setting table 433 as ACT 15. Next, the processor 41 ends the information processing.

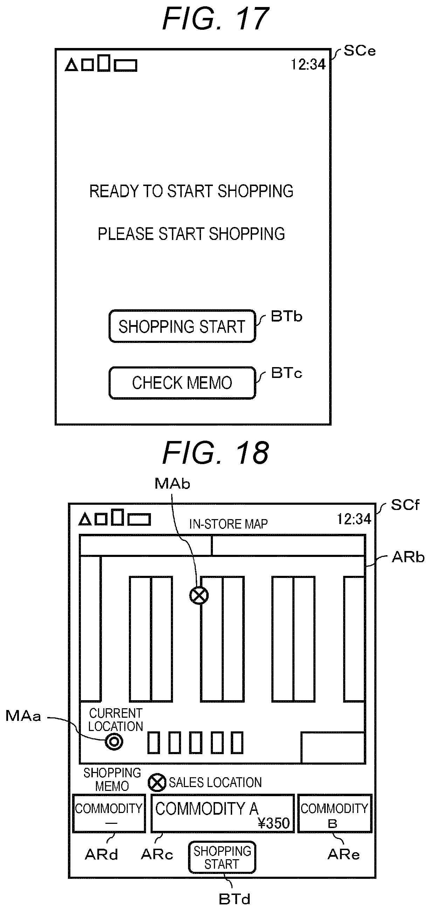

When the shopping support apparatus 40 is connected to the in-store LAN, the processor 41 determines YES in ACT 13, and proceeds to ACT 16. The processor 41 displays a check-in completion screen SCe (refer to FIG. 17) on the touch panel 44 as ACT 16.

FIG. 17 is an example of the check-in completion screen SCe. As illustrated in the drawing, images of a "shopping start" button BTb and a "check memo" button BTc are displayed on the check-in completion screen SCe together with a message indicating that shopping is ready to start.

The consumer who confirms the check-in completion screen SCe touches the "shopping start" button BTb or the "check memo" button BTc. That is, a consumer who wants to confirm a sales place of a commodity registered in the shopping memo touches the "check memo" button BTc. A consumer who starts shopping without confirming the sales place of the commodity touches the "shopping start" button BTb.

When the shopping support apparatus 40 is connected to the in-store LAN, the store server 11 of the store system 10 acquires a program ID of the shopping support program 431 from the shopping support apparatus 40. The store server 11 acquires data of the setting item "company code" correlated with the item number No. 2 of the store setting table 433 provided in the shopping support apparatus 40, and data of the setting item "store code" correlated with the item number No. 3. Next, the store server 11 checks whether the preset company code and store code match the data of "company code" and "store code" acquired from the shopping support apparatus 40. When the preset company code and store code match the data of "company code" and "store code" acquired therefrom, the store server 11 notifies the virtual POS server 12 of the program ID of the shopping support apparatus 40. The virtual POS server 12 generates a commodity registration table in which the program ID notified from the store server 11 is set. The store server 11 also wirelessly transmits a check-in completion command to the shopping support apparatus 40. When receiving the check-in completion command therefrom, the processor 41 of the shopping support apparatus 40 displays the check-in completion screen SCe on the touch panel 44.

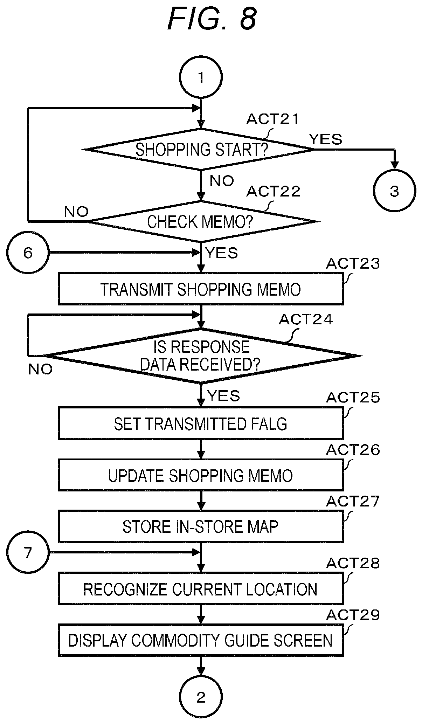

The processor 41 displaying the check-in completion screen SCe checks whether the "shopping start" button BTb has been touched as ACT 21 in FIG. 8. When the "shopping start" button BTb has not been touched, the processor 41 determines NO in ACT 21, and proceeds to ACT 22. The processor 41 checks whether the "check memo" button BTc has been touched as ACT 22. When the "check memo" button BTc has not been touched, the processor 41 determines NO in ACT 22, and returns to ACT 21. Here, the processor 41 waits for the "shopping start" button BTb to be touched or the "check memo" button BTc to be touched in ACT 21 and ACT 22.

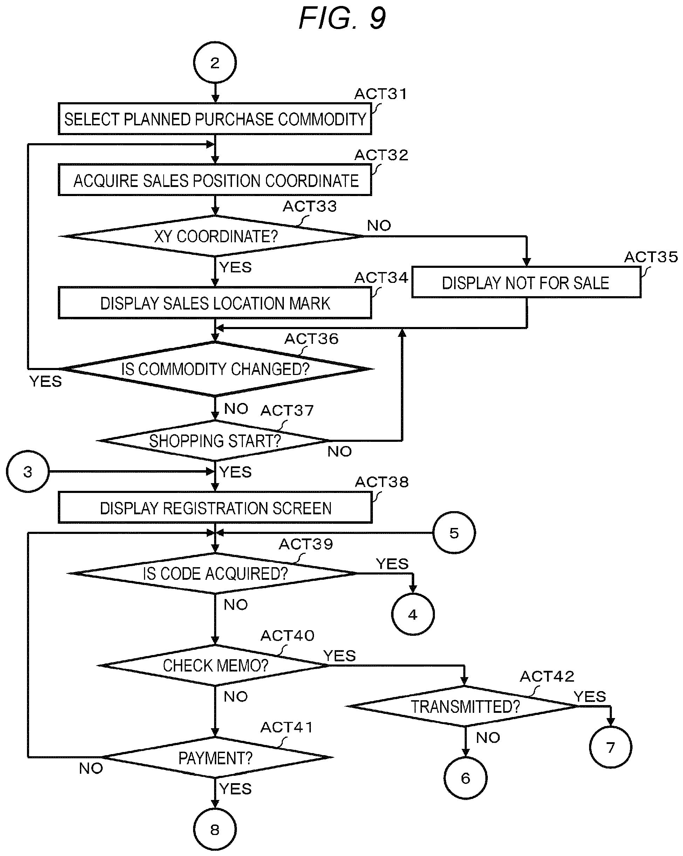

In a standby state of ACT 21 and ACT 22, when the "shopping start" button BTb is touched, the processor 41 determines YES in ACT 21, and proceeds to ACT 38 in FIG. 9. Processing after ACT 38 will be described later.

In the standby state of ACT 21 and ACT 22, when the "check memo" button BTc is touched, the processor 41 determines YES in ACT 22, and proceeds to ACT 23. The processor 41 transmits data of the shopping memo table 434 to the management server 20 as ACT 23. For example, the processor 41 uses the parameter set in the third field 63 corresponding to the item numbers from No. 11 to No. 13 of the store setting table 433, thereby transmitting the data of the shopping memo table 434 to the management server 20 via the in-store LAN. Alternatively, the processor 41 uses the parameter set in the third field 63 corresponding to the item numbers from No. 17 to No. 19 of the store setting table 433, thereby transmitting the data of the shopping memo table 434 to the management server 20 via the Internet. Here, the processor 41 transmits the company code and the store code set in the third field 63 corresponding to the item numbers No. 2 and No. 3 of the store setting table 433 together with the data of the shopping memo table 434.

Here, an operation of the management server 20 that receives the data of the shopping memo table 434 will be described with reference to the flowchart of FIG. 12.

When receiving the data of the shopping memo table 434, the processor 21 of the management server 20 starts processing of a procedure illustrated in the flowchart of FIG. 12. First, the processor 21 detects, as ACT 81, the company code and the store code which are information that can specify the store of the data transmission source from the received data. Next, the processor 21 acquires, as ACT 82, the store data file 231 in which the company code and the store code are described in the areas 81 and 82. Hereinafter, the acquired store data file 231 will be referred to as a target store data file 231.

The processor 21 initializes a counter n to "0" as ACT 83. For example, the counter n is formed in the volatile memory area of the main memory 22. The processor 21 counts up the counter n by "1" as ACT 84. Next, the processor 21 checks whether a planned purchase record correlated with the index number n exists in the shopping memo table 434 received from the shopping support apparatus 40 as ACT 85. Hereinafter, the planned purchase record correlated with the index number n will be referred to as a planned purchase record n.

When the planned purchase record n exists, the processor 21 determines YES in ACT 85, and proceeds to ACT 86. The processor 21 acquires the planned purchase record n from the shopping memo table 434 as ACT 86. The processor 21 checks whether a planned purchase date of the planned purchase record n is passed. That is, the processor 21 checks whether the planned purchase date is the same date as, or before, the date tracked by the clock 24. When the planned purchase date is not passed, the processor 21 determines NO in ACT 87 and returns to ACT 84. The processor 21 further counts up the counter n by "1" and determines whether the planned purchase record n exists.

When the planned purchase date is passed, the processor 21 determines YES in ACT 87, and proceeds to ACT 88. The processor 21 checks whether the planned purchase commodity specified by the commodity code of the planned purchase record n is sold in the store as ACT 88. That is, the processor 21 confirms whether the commodity code of the planned purchase record n is included in the commodity data described in the area 84 of the target store data file 231. When the commodity code of the planned purchase record n is included therein, the processor 21 recognizes that the planned purchase commodity is sold in the store.

When the planned purchase commodity is sold in the store, the processor 21 determines YES in ACT 88, and proceeds to ACT 89. The processor 21 acquires a price and a sales position coordinate from the commodity data of the planned purchase commodity as ACT 89. Next, the processor 21 records the price and the sales position coordinate in the planned purchase record n of the shopping memo table 434 as ACT 90. When the planned purchase commodity is not sold in the store, the processor 21 determines NO in ACT 88, and proceeds to ACT 91. The processor 21 records "0" as the sales position coordinate in the planned purchase record n of the shopping memo table 434 as ACT 91.

After ending the processing of ACT 90 or ACT 91, the processor 21 returns to ACT 84. The processor 21 further counts up the counter n by "1" and determines whether the planned purchase record n exists.

When the planned purchase record n exists in the shopping memo table 434, the processor 21 repeatedly executes the processing of ACT 86 to ACT 91. Therefore, in the planned purchase record n of the commodity being sold in the store, the price and the sales position coordinate in the store are recorded. In the planned purchase record n of the commodity being sold in the store, "0" is recorded as the sales position coordinate.

When the planned purchase record n does not exist in the shopping memo table 434, the processor 21 determines NO in ACT 85, and proceeds to ACT 92. The processor 21 acquires in-store map data from the target store data file 231 as ACT 92. Next, the processor 21 generates response data with the in-store map data and the shopping memo table 434 in which the sales position information is recorded. As ACT 94, the processor 21 transmits the response data to the shopping support apparatus 40 which is a data transmission source of the shopping memo table 434. Next, the information processing by the processor 21 of the management server 20 that receives the data of the shopping memo table 434 is terminated.

The response data transmitted from the management server 20 is transmitted to the shopping support apparatus 40 through a route opposite to a data transmission route of the shopping memo table 434.

The embodiment refers back to the description of FIG. 8.

The processor 41 of the shopping support apparatus 40 that transmits the data of the shopping memo table 434 waits for the response data as ACT 24. When receiving the response data from the management server 20, the processor 41 determines YES in ACT 24, and proceeds to ACT 25. The processor 41 sets a transmitted flag to "1" as ACT 25. The transmitted flag is formed in the built-in memory 42. The transmitted flag is reset to "0" in a default state.

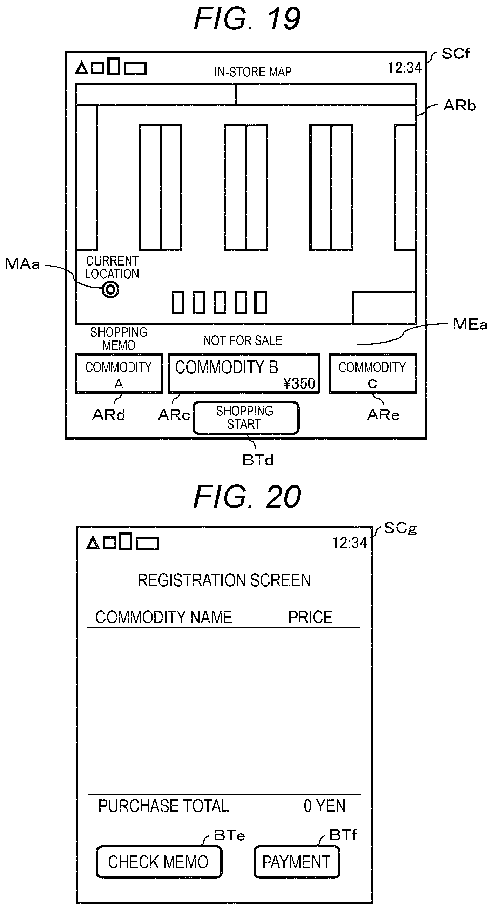

As ACT 26, the processor 41 updates the data of the shopping memo table 434 to match the data of the shopping memo table 434 included in the response data. The processor 41 stores the in-store map data included in the response data as ACT 27. The processor 41 recognizes a current location based upon information included in the beacon signal received by the signal receiving circuit 47 as ACT 28. Next, the processor 41 displays a commodity guide screen SCf (refer to FIG. 18 or FIG. 19) on the touch panel 44 as ACT 29.

FIGS. 18 and 19 are examples of the commodity guide screen SCf. As illustrated in FIGS. 18 and 19, an in-store map image ABb corresponding to the in-store map data is displayed on the commodity guide screen SCf. A current location mark MAa is displayed at a point corresponding to the current location on the in-store map image ABb. In an area excluding the in-store map image ABb on the commodity guide screen SCf, a first display area ARc, a second display area ARd, and a third display area ARe are formed as a display area of the planned purchase commodity. The commodity name and the price are displayed in the first display area ARc. The commodity name is displayed in the second display area ARd and the third display area ARe. A shopping start button BTd is displayed on the commodity guide screen SCf.

The processor 41 selects the planned purchase record correlated with the index number "1" from the shopping memo table 434 as ACT 31 in FIG. 9. The processor 41 displays the commodity name and the price of the selected planned purchase record in the first display area ARc. When there is a planned purchase record whose index number is lower than that of the selected planned purchase record by "1" in the shopping memo table 434, the processor 41 displays the commodity name of the planned purchase record in the second display area ARd. When there is a planned purchase record whose index number is larger than that of the selected planned purchase record by "1" in the shopping memo table 434, the processor 41 displays the commodity name of the planned purchase record in the third display area ARe.

The processor 41 acquires a sales position coordinate of the selected planned purchase record as ACT 32. As ACT 33, the processor 41 checks whether the sales position coordinate is an XY coordinate. When the sales position coordinate is the value of the XY coordinate, the processor 41 determines YES in ACT 33, and proceeds to ACT 34. The processor 41 displays a sales location mark MAb (refer to FIG. 18) at a point corresponding to an XY coordinate of an in-store map image ARb as ACT 34.

When the sales position coordinate is "0", the processor 41 determines NO in ACT 33, and proceeds to ACT 35. The processor 41 displays a message MEa (refer to FIG. 19) indicating that the commodity of the selected planned purchase record is not sold as ACT 35. As the message MEa, for example, a content "not for sale" can be considered.

After ending the processing of ACT 34 and ACT 35, the processor 41 proceeds to ACT 36. The processor 41 checks whether a change of the planned purchase commodity has been instructed as ACT 36. For example, when the second display area ARd of the commodity guide screen SCf is touched, the processor 41 recognizes that a change to a commodity whose index number is smaller than that of the selected planned purchase record by "1" is instructed. For example, when the third display area ARe of the commodity guide screen SCf is touched, the processor 41 recognizes that a change to a commodity whose index number is larger than that of the selected planned purchase record by "1" is instructed.

When the change of the planned purchase commodity is not instructed, the processor 41 determines NO in ACT 36, and proceeds to ACT 37. The processor 41 checks whether the shopping start button BTd has been touched as ACT 37. When the shopping start button BTd has not been touched, the processor 41 determines NO in ACT 37, and returns to ACT 36. Here, the processor 41 waits for the change of the planned purchase commodity to be instructed or the shopping start button BTd to be touched in ACT 36 and ACT 37.

In a standby state of ACT 36 and ACT 37, when the change of the planned purchase commodity is instructed, the processor 41 returns to ACT 32. That is, the processor 41 acquires the sales position coordinate of the planned purchase commodity for which the change is instructed. Next, when the sales position coordinate is the value of the XY coordinate, the processor 41 displays the sales location mark MAb at the point corresponding to the XY coordinate of the in-store map image ARb. When the sales position coordinate is "0", the processor 41 displays the message MEa. In the first display area ARc, the commodity name and the price of the planned purchase commodity after change are displayed. In the second display area ARd, the commodity name of the planned purchase commodity whose index number is one before that of the planned purchase commodity after change is displayed. In the third display area ARe, the commodity name of the planned purchase commodity whose index number is one after that of the planned purchase commodity after change is displayed.

In the standby state of ACT 36 and ACT 37, when the shopping start button BTd is touched, the processor 41 determines YES in ACT 37, and proceeds to ACT 38. As described above, when the shopping start button BTb on the check-in completion screen SCe is touched or the shopping start button BTd on the commodity guide screen SCf is touched, the processor 41 proceeds to ACT 38. The processor 41 displays a registration screen SCg (refer to FIG. 20) on the touch panel 44 as ACT 38.

FIG. 20 is an example of the registration screen SCg. As illustrated in the drawing, an area for displaying the commodity name and the price of the purchased commodity and the purchase total of money thereof is formed on the registration screen SCg. Images of a "check memo" button BTe and a "payment" button BTf are displayed.

A consumer who starts shopping holds the lens of the camera 45 over the barcode attached to the purchased commodity when the purchased commodity is stored in a housing body such as a shopping basket or a shopping cart. Accordingly, the barcode is scanned by the camera 45. The barcode includes the commodity code of the purchased commodity. When the consumer finishes shopping, the consumer touches the "payment" button BTf. Meanwhile, the consumer may wish to know the sales place of the planned purchase commodity even during shopping. In such a case, the consumer touches the "check memo" button BTe.

The processor 41 displaying the registration screen SCg checks whether the data code is read by the camera 45 as ACT 39. When the data code is not read, the processor 41 determines NO in ACT 39, and proceeds to ACT 40. The processor 41 checks whether the "check memo" button BTe has been touched as ACT 40. When the "check memo" button BTe has not been touched, the processor 41 determines NO in ACT 40, and proceeds to ACT 41. The processor 41 checks whether the "payment" button BTf has been touched as ACT 41. When the "payment" button BTf has not been touched, the processor 41 determines NO in ACT 41, and returns to ACT 39. Here, the processor 41 waits for the data code to be read, the "check memo" button BTe to be touched, or the "payment" button BTf to be touched in ACT 39 to ACT 41.

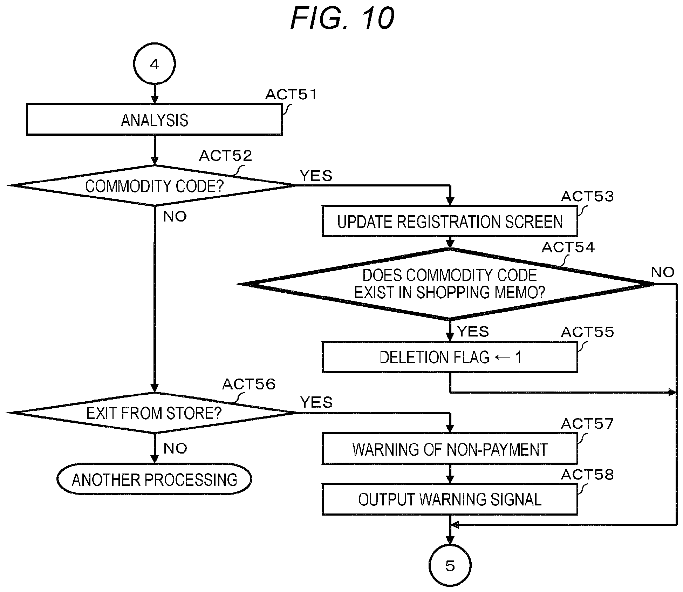

In a standby state of ACT 39 to ACT 41, when the data code is read by the camera 45, the processor 41 determines YES in ACT 39, and proceeds to ACT 51 in FIG. 10. The processor 41 analyzes the data code as ACT 51. Next, the processor 41 confirms whether the data code is the commodity code as ACT 52. When the data code is a commodity code, the processor 41 determines YES in ACT 52, and proceeds to ACT 53. The processor 41 updates the registration screen SCg as ACT 53.

Specifically, the processor 41 transmits the commodity code to the store system 10 by using wireless communication. At this time, when the setting information of the setting item "in-store LAN flag" correlated with the item number No. 10 of the store setting table 70 is "1", the processor 41 controls the wireless unit 46 so that data of the commodity code is transmitted to the store system 10 via a LAN in the store. Here, the data of the commodity code is received by the access point 15 and then provided to the virtual POS server 12.

On the other hand, when the setting information of the setting item "in-store LAN flag" is "0", the processor 41 controls the communication interface 48 so that the data of the commodity code is transmitted to the store system 10 via the management server 20. Here, the data of the commodity code is received by the communication server 13 and then provided to the virtual POS server 12.

When virtual POS server 12 receives the data of a commodity code, the virtual POS server 12 then acquires the commodity data, such as the commodity name and the price of the commodity, corresponding to the commodity code from the commodity database of the store server 11. Alternatively, the virtual POS server 12 acquires the commodity data from a local commodity database obtained by copying the commodity database of the store server 11 to the virtual POS server 12. The virtual POS server 12 generates sales data of the purchased commodity based upon the acquired commodity data, and registers the generated sales data in the commodity registration table in which the program ID of the shopping support apparatus 40 is set. The virtual POS server 12 generates data of the registration screen SCg based upon the data registered in the commodity registration table, and transmits the generated data thereof to the shopping support apparatus 40. Even here, the data of the registration screen SCg is transmitted via the access point 15 when the setting information of the setting item "in-store LAN flag" is "1". When the setting information of the setting item "in-store LAN flag" is "0", the data of the registration screen SCg is transmitted to an information terminal via the management server 20. Thus, the processor 41 of the shopping support apparatus 40 updates the registration screen SCg displayed on the touch panel 44.

The processor 41 updating the registration screen SCg checks whether the commodity code of the purchased commodity exists in the shopping memo table 434 as ACT 54. When the commodity code of the purchased commodity does not exist in the shopping memo table 434, the processor 41 determines NO in ACT 54, and returns to the standby state of ACT 39 to ACT 41. When the commodity code of the purchased commodity exists in the shopping memo table 434, the processor 41 determines YES in ACT 54, and proceeds to ACT 55. The processor 41 sets a deletion flag correlated with the commodity code in the shopping memo table 434 to "1" as "ACT 55". After that, the processor 41 returns to the standby state of ACT 39 to ACT 41.

In the standby state of ACT 39 to ACT 41, there is a possibility that the consumer may allow the camera 45 to read the exiting code 52 instead of the commodity code. Therefore, when the data code read by the camera 45 is not the commodity code, the processor 41 determines NO in ACT 52, and proceeds to ACT 56. The processor 41 checks whether the exiting code 52 is read as ACT 56. When the exiting code 52 is read, the processor 41 determines YES in ACT 56, and proceeds to ACT 57. The processor 41 issues a warning of non-payment as ACT 57. For example, the processor 41 displays a non-payment warning screen on the touch panel 44, thereby warning that payment is not completed. The processor 41 controls the wireless unit 46 to transmit a warning signal to the store server 11 as ACT 58. Therefore, the warning signal is wirelessly transmitted from the wireless unit 46. The warning signal is transmitted via the wireless LAN, received by the access point 15, and transmitted to the store server 11. For example, the store server 11 receiving the warning signal outputs the warning signal to a client terminal, in which a clerk is an operator, and causes the client terminal to issue a warning of a non-payment error.

The processor 41 that controls the transmission of the warning signal returns to the standby state of ACT 39 to ACT 41.

In the standby state of ACT 39 to ACT 41, when the "check memo" button BTe is touched, the processor 41 determines YES in ACT 40, and proceeds to ACT 42. The processor 41 checks whether the transmitted flag is set to "1" as ACT 42. When the transmitted flag is not set to "1", the processor 41 determines NO in ACT 42, and returns to ACT 23 in FIG. 8. Next, the processor 41 executes the processing after ACT 23 in the same manner as described above. When the transmitted flag is set to "1", the processor 41 determines YES in ACT 42, and returns to ACT 28 in FIG. 8. Next, the processor 41 executes the processing after ACT 28 in the same manner as described above.

There is a case in which a consumer who starts shopping by touching the "shopping start" button BTd without touching the "check memo" button BTc on the check-in completion screen SCe may touch the "check memo" button BTe on the registration screen SCg. In this case, the transmitted flag is not set to "1". Therefore, the processor 41 returns to ACT 23.

The processor 41 transmits the data of the shopping memo table 434 to the management server 20. Next, when receiving the response data from the management server 20, the processor 41 sets the transmitted flag to "1". The processor 41 updates the data of the shopping memo table 434 to match the data of the shopping memo table 434 included in the response data. The processor 41 stores the in-store map data. The processor 41 recognizes the current location. Next, the processor 41 displays the commodity guide screen SCf on the touch panel 44.

There is case in which a consumer who starts shopping by touching the "shopping start" button BTd after touching the "check memo" button BTc on the check-in completion screen SCe may touch the "check memo" button BTe on the registration screen SCg again. Here, the transmitted flag is set to "1". Accordingly, the processor 41 returns to ACT 28.

The processor 41 recognizes the current location. The processor 41 displays the commodity guide screen SCf on the touch panel 44.

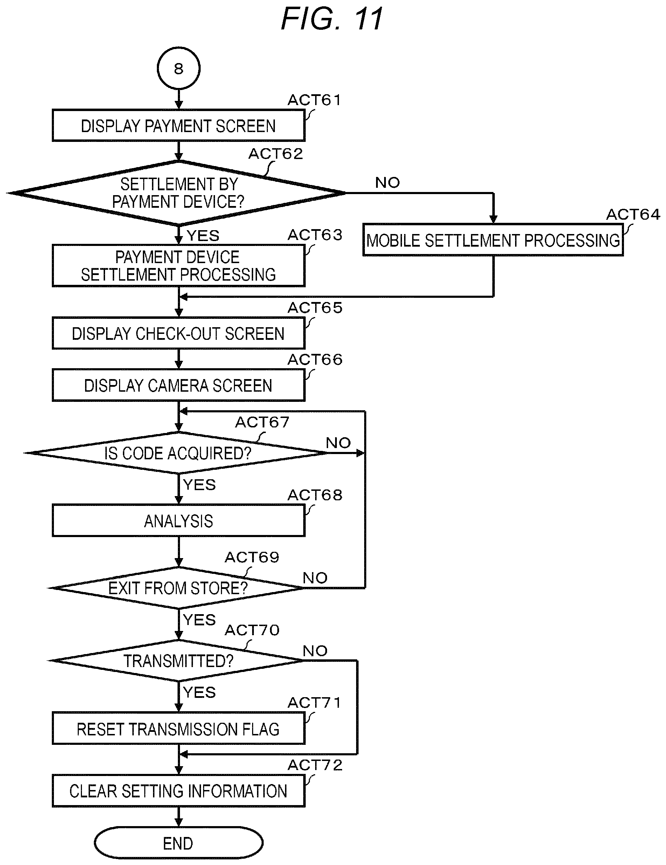

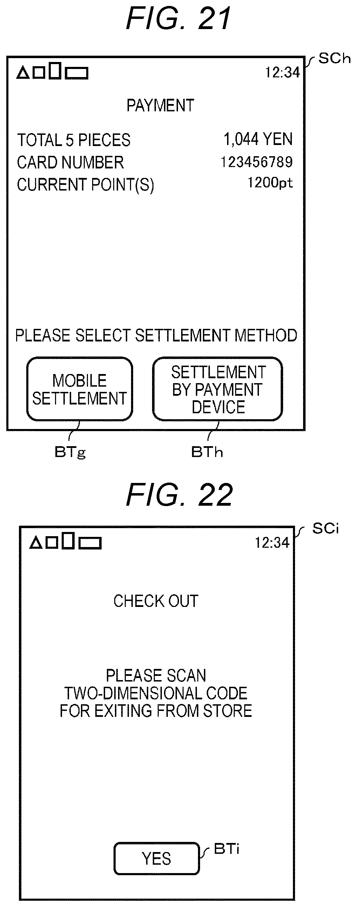

When the "payment" button BTf is touched in the standby state of ACT 39 to ACT 41, the processor 41 determines YES in ACT 41 and proceeds to ACT 61 in FIG. 11. The processor 41 displays a payment screen SCh (refer to Fig. 21) on the touch panel 44 as ACT 61.

FIG. 21 is an example of the payment screen SCh. As illustrated in the drawing, a total number of pieces of purchased commodities and a total amount of money of the purchased commodity are displayed on the payment screen SCh. The total number of pieces and the total amount of money are values calculated from data of the commodity registration table in which the program ID of the shopping support apparatus 40 is set in the virtual POS server 12. The payment screen SCh includes a button BTg for selecting the mobile settlement and a button BTh for selecting the settlement by payment device as a payment method. When the value of the setting item "mobile settlement flag" corresponding to the item number No. 30 is "0", that is, when the entering code 51 of the store where the mobile settlement is not adopted is read, the button BTg is not displayed. Alternatively, the button BTg is deactivated. Only when the card number of the point card is registered in the shopping support apparatus 40, the card number and the stored points up to the current time are displayed on the payment screen SCh.

The consumer who confirms the payment screen SCh touches the button BTg when paying the price of the purchased commodity with the mobile settlement. The consumer who performs the settlement with the payment device 14 touches the button BTh.

The processor 41, which controls the display of the payment screen SCh, waits for the mobile settlement to be selected or waits for the settlement by payment device to be selected as ACT 62. That is, the processor 41 waits for the button BTg to be touched or the button BTh to be touched. When the button BTh is touched, that is, when the settlement by payment device is selected, the processor 41 determines YES in ACT 62, and proceeds to ACT 63. The processor 41 executes payment device settlement processing as ACT 63. On the other hand, when the button BTg is touched, that is, when the mobile settlement is selected, the processor 41 determines NO in ACT 62, and proceeds to ACT 64. The processor 41 executes mobile settlement processing as ACT 64.

Since both the payment device settlement processing and the mobile settlement processing are well known processing, detailed description thereof will be omitted. When the card number of the point card is registered in the shopping support apparatus 40, for example, a point calculated for the purchase total of money is added to the stored point.

When ending the payment device settlement processing or the mobile settlement processing, the processor 41 proceeds to ACT 65. The processor 41 displays a check-out screen SCi (refer to FIG. 22) on the touch panel 44 as ACT 65.

FIG. 22 is an example of the check-out screen SCi. As illustrated in the drawing, an image of a "Yes" button BTi is displayed on the check-out screen SCi together with a message of instructing scanning of the two-dimensional code for exiting from the store. The consumer who confirms the check-out screen SCi touches the "Yes" button BTi.

When detecting that the "Yes" button BTi of the check-out screen SCi is touched by the signal from the touch panel 44, the processor 41 displays the camera screen SCb (refer to FIG. 14) on the touch panel 44 as ACT 66. The consumer who confirms the camera screen SCb holds the lens of the camera 45 of the shopping support apparatus 40 over the exiting code 52 so that the exiting code 52 at the exit of the store fits within the reading area ARa.

The processor 41 displaying the camera screen SCb waits for the camera 45 to read the data code of the two-dimensional code system as ACT 67. As illustrated in FIG. 15, when the data code of the two-dimensional code system fits within the reading area ARa, the processor 41 determines that the data code is read. The processor 41 determines YES in ACT 67, and proceeds to ACT 68.

As ACT 68, the processor 41 analyzes data encoded by the data code from an image of the data code imaged by the camera 45. Next, as ACT 69, the processor 41 determines whether the data code read by the camera 45 is the exiting code 52 whose store entry flag is set to "0".

When the data code read by the camera 45 is other than the exiting code 52, the processor 41 determines NO in ACT 69, and returns to ACT 67. The processor 41 waits for the camera 45 to read the data code of the two-dimensional code system again.

When the data code read by the camera 45 is the exiting code 52 whose store entry flag is "0", the processor 41 determines YES in ACT 69, and proceeds to ACT 70. The processor 41 checks a transmitted flag as ACT 70. When the transmitted flag is set to "1", the processor 41 determines YES in ACT 70, and proceeds to ACT 71. The processor 41 resets the transmitted flag to "0" as ACT 71. When the transmitted flag is not set to "1", the processor 41 determines NO in ACT 70, and skips the processing of ACT 71.

As such, when executing the processing of ACT 71 or skipping the processing of ACT 71, the processor 41 proceeds to ACT 72. The processor 41 clears setting information described in the third field 63 of the store setting table 433 as ACT 72. Next, the processor 41 ends the information processing.

Here, the shopping support apparatus 40 forms a control unit by allowing the processor 41 to execute the processing shown by the flowcharts of FIGS. 8 to 11. That is, the processor 41 controls the shopping support operation by the shopping support program 431 based upon the setting information stored in the store setting table 433. The shopping support operation includes the processing of ACT 25 to ACT 29 in FIG. 8 and the processing of ACT 31 to ACT 36 in FIG. 9. That is, the shopping support operation includes an operation of providing a guide to the sales place of the planned purchase commodity in the store where the store entry operation is performed. Specifically, the shopping support operation includes an operation of providing the guide to the sales place of the planned purchase commodity together with the current location recognized by the recognition unit. The shopping support operation includes an operation of notifying that there is no sale when the planned purchase commodity is not sold in the store where the store entry operation is performed.

The shopping support apparatus 40 forms a clearing unit by allowing the processor 41 to execute the processing of ACT 69 to ACT 72 of FIG. 11. That is, the processor 41 receives a store exit operation from a store, and clears the setting information acquired when the store entry operation is performed in the store from the store setting table 433.

According to the shopping support apparatus 40 configured as described above, a consumer who is an owner can register a purchased commodity by themselves, and it is possible to accurately notify a sales place of a commodity that the consumer plans to purchase by displaying the commodity guide screen SCf. Therefore, convenience of the shopping support apparatus 40 can be further improved.

A current location of the shopping support apparatus 40, that is, a current position of the consumer is displayed on the commodity guide screen SCf. Therefore, the consumer can easily guess an efficient route from the current location to a place where the planned purchase commodity is sold.

When the planned purchase commodity is not sold, a piece of information indicating that the planned purchase commodity is not sold is displayed on the commodity guide screen SCf. Therefore, since the consumer does not wastefully search for the commodity that is not sold, the convenience thereof can be further improved.

Meanwhile, in the shopping support apparatus 40, when the consumer performs the operation for reading the entering code 51, the parameter for the shopping support apparatus 40 to communicate with the management server 20 is set, thereby making it possible to communicate with the management server 20. The processor 41 controls the operation of providing the guide to the sales place of the planned purchase commodity based upon the information obtained from the management server 20. Therefore, the shopping support apparatus 40 does not need to store the parameter for communicating with the management server 20 in advance. As a result, there is no concern that the parameter may be used illegally and unauthorized access to the management server 20 may occur. The parameter set when entering the store is cleared when the consumer exits from the store. Therefore, the above-described concern can be completely eliminated.

While the embodiment of the shopping support apparatus 40 is described above, the embodiment is not limited thereto.

In the embodiment, the shopping support program 431 and the shopping memo program 432 are described as separate programs. As another embodiment, the shopping support program 431 may include a function of the shopping memo program 432.

In the above-described embodiment, the sales place of each commodity in the store is indicated by the sales position coordinate in which the floor of the store is the XY plane of the orthogonal coordinate system. However, the sales place of the commodity may be indicated by using a coordinate of another coordinate system, for example, a polar coordinate system. In addition to the sales position coordinate, the number of stages of the shelf on which the commodity is arranged may be included. For example, with respect to a commodity displayed on a second stage of the shelf from the top of the commodity shelf, information indicating "the second stage from the top" is displayed together with the sales location mark MAb, thereby making it possible to notify the consumer of the display place of the commodity more accurately.

In the embodiment, the in-store map image is a two-dimensional image. However, the in-store map image may be a three-dimensional image.

The embodiment describes the case in which the change of the planned purchase commodity is instructed by touching the second display area ARd or the third display area ARe of the commodity guide screen SCf. The operation for instructing the change of the planned purchase commodity is not limited thereto. For example, when the commodity name displayed in the second display area ARd is flicked to the side of the second display area ARd, the processor 41 recognizes that a change to a commodity whose index number is smaller by "1" is instructed, and when the same commodity name is flicked to the side of the third display area ARe, the processor 41 may recognize that a change to a commodity whose index number is larger by "1" is instructed.

In the embodiment, the beacon is used as a recognition unit that recognizes the current location of the shopping support apparatus 40. The recognition unit is not limited to a technology using the beacon. For example, the current location of the shopping support apparatus 40 may be recognized by using a global positioning system (GPS).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A shopping support apparatus (40), comprising:
a storage (43) for storing planned purchase commodity information and a shopping support program useable at a plurality of different stores, each store having different setting information for the shopping support program;
a camera (45) configured to acquire a store entrance code and setting information encoded in the store entrance code for a store; and
a processor (41) configured to execute the shopping support program according to the setting information acquired from decoding the store entrance code, wherein
the shopping support program is configured to provide a function guiding a customer to a sales location for a planned purchase commodity in the store, the planned purchase commodity being listed in the stored planned purchase commodity information;
wherein
the shopping support apparatus further comprises a signal receiving circuit (47) configured for receiving a beacon signal, the beacon signal including information for specifying a location of a corresponding beacon signal transmission source,
the processor is further configured to identify a current location of the shopping support apparatus in the store based on the information included in the beacon signal, wherein
the shopping support program is configured to
display a button configured to confirm check-in completion and a button to start shopping,
guide to the sales location of the planned purchase commodity based on the current location of the shopping support apparatus,
display, in a displayed (SCf) in-store map image corresponding to in-store map data, a location mark corresponding to the current location,
display, in an area excluding the in-store map image, a display area (ARc, ARd, ARe) displaying a commodity name,
when the button to start shopping is operated, display a screen of registered products, the registered products including barcodes acquired by the camera (45).

2. The shopping support apparatus according to claim 1, wherein
when the shopping support program is executed according to the setting information acquired from decoding the store entrance code, the shopping support program provides a notification that a planned purchase commodity is not presently available at the store.

3. The shopping support apparatus according to any one of claims 1 to 2, wherein
the setting information acquired from decoding the store entrance code includes
a parameter for a battery check threshold,
a parameter for connecting with an in-store wireless LAN,
a parameter for communicating with the in-store wireless LAN,
wherein, the shopping support program is configured to,
when the remaining battery level of the shopping support device is greater than the battery check threshold, the shopping support program connects to the in-store wireless LAN, and
after the connection to the in-store wireless LAN is complete, display a button to instruct the user to confirm the items to be purchased and a button to instruct the user to start shopping.

4. The shopping support apparatus according to any one of claims 1 to 3,
wherein
the processor is further configured to clear the setting information acquired from the store entrance code for the store after a store exit code for the store is acquired by the camera.

5. The shopping support apparatus according to any one of claims 1 to 4, wherein the store entrance code is a two-dimensional code.

6. The shopping support apparatus according to any one of claims 1 to 5, wherein the shopping support program provides mobile settlement.

7. A shopping support system to be provided at a plurality of different stores, the system comprising:
a store entrance code posted at an entrance of each store in a plurality of different stores, each store entrance code encoding different setting information for the respective store
a shopping support apparatus according to any one of claims 1 to 6.

8. The shopping support system according to claim 7, wherein the shopping support program provides mobile settlement for at least some of the plurality of different stores.

9. The shopping support system according to claim 7 or 8, wherein the shopping support apparatus further includes a shopping list generation program configured to generate the planned purchase commodity information.

10. A non-transitory computer readable storage medium storing program instructions which when executed by a processor of a shopping support apparatus cause the shopping support apparatus to perform a method comprising:
acquiring a store entrance code and setting information encoded in the store entrance code for a store using a camera; and
executing a shopping support program according to the setting information acquired from decoding the store entrance code, and
guiding a customer to a sales location for a planned purchase commodity in the store, the planned purchase commodity being listed in planned purchase commodity information stored in the shopping support apparatus, the method further comprising:
receiving a beacon signal, the beacon signal including information for specifying a location of a corresponding beacon signal transmission source
identifying a current location of the shopping support apparatus in the store based on the information included in the beacon signal, wherein
the shopping support program is configured to
display a button configured to confirm check-in completion and a button to start shopping,
guide to the sales location of the planned purchase commodity based on the current location of the shopping support apparatus
display, in a displayed (SCf) in-store map image corresponding to in-store map data, a location mark corresponding to the current location,
display, in an area excluding the in-store map image, a display area (ARc, ARd, ARe) displaying a commodity name,
when the button to start shopping is operated, display a screen of registered products, the registered products including barcodes acquired by the camera (45).

11. The non-transitory computer readable storage medium according to claim 10, wherein the shopping support program provides mobile settlement.

12. The non-transitory computer readable storage medium according to claim 10 or 11, wherein
the setting information acquired from decoding the store entrance code includes a parameter for communicating with a server of the store.

13. The non-transitory computer readable storage medium according to any one of claims 10 to 12, the method further comprising:
clearing the setting information acquired from the store entrance code for the store after a store exit code for the store is acquired by the camera.

## Patentansprüche

1. Einkaufsunterstützungsvorrichtung (40), umfassend:
einen Speicher (43) zum Speichern von geplanten Kaufwareninformationen und eines Einkaufsunterstützungsprogramms, das in einer Vielzahl von verschiedenen Läden verwendbar ist, wobei jeder Laden unterschiedliche Einstellungsinformationen für das Einkaufsunterstützungsprogramm aufweist;
eine Kamera (45), die konfiguriert ist, um einen Ladeneingangscode und in dem Ladeneingangscode kodierte Einstellungsinformationen für einen Laden zu erfassen; und
einen Prozessor (41), der konfiguriert ist, um das Einkaufsunterstützungsprogramm gemäß den Einstellungsinformationen auszuführen, die aus einem Decodieren des Ladeneingangscodes erfasst werden, wobei
das Einkaufsunterstützungsprogramm konfiguriert ist, um eine Funktion bereitzustellen, die einen Kunden zu einem Verkaufsort für eine geplante Kaufware in dem Laden führt, wobei die geplante Kaufware in den gespeicherten geplanten Kaufwareninformationen aufgeführt ist;
wobei
die Einkaufsunterstützungsvorrichtung ferner eine Signalempfangsschaltung (47) umfasst, die zum Empfangen eines Bakensignals konfiguriert ist, wobei das Bakensignal Informationen zum Spezifizieren eines Standorts einer entsprechenden Bakensignal-Übertragungsquelle beinhaltet,
der Prozessor ist ferner konfiguriert ist, um einen aktuellen Standort der Einkaufsunterstützungsvorrichtung in dem Laden basierend auf den in dem Bakensignal beinhalteten Informationen zu identifizieren, wobei
das Einkaufsunterstützungsprogramm zu Folgendem konfiguriert ist
Anzeigen einer Schaltfläche, die konfiguriert ist, um den Anmeldevorgangabschluss zu bestätigen, und eine Einkaufsbeginn-Schaltfläche,
Führen zu dem Verkaufsstandort der geplanten Kaufware basierend auf dem aktuellen Standort der Einkaufsunterstützungsvorrichtung,
Anzeigen, in einem angezeigten (SCf) Ladenkartenbild, das den Ladenkartendaten entspricht, einer Standortmarkierung anzuzeigen, die dem aktuellen Standort entspricht,
Anzeigen, in einem Bereich außerhalb des Ladenkartenbilds, eines Anzeigebereichs (ARc, ARd, ARe), der einen Warennamen anzeigt,
wenn die Einkaufsbeginn-Schaltfläche betätigt wird, Anzeigen eines Bildschirms mit registrierten Produkten, wobei die registrierten Produkte Strichcodes beinhalten, die von der Kamera (45) erfasst werden.

2. Einkaufsunterstützungsvorrichtung nach Anspruch 1, wobei
wenn das Einkaufsunterstützungsprogramm gemäß den Einstellungsinformationen ausgeführt wird, die aus einem Decodieren des Ladeneingangscodes erfasst werden, stellt das Einkaufsunterstützungsprogramm eine Benachrichtigung bereit, dass eine geplante Kaufware in dem Laden derzeit nicht verfügbar ist.

3. Einkaufsunterstützungsvorrichtung nach einem der Ansprüche 1 bis 2, wobei
die aus dem Decodieren des Ladeneingangscodes erfassten Einstellungsinformation einen Parameter für einen Batterieprüfungsschwellenwert beinhalten,
einen Parameter zum Verbinden mit einem drahtlosen LAN des Ladens,
einen Parameter zum Kommunizieren mit dem drahtlosen LAN des Ladens,
wobei das Einkaufsunterstützungsprogramm zu Folgendem konfiguriert ist
wenn der verbleibende Batteriestand der Einkaufsunterstützungsvorrichtung größer ist als der Batterieprüfungsschwellenwert, verbindet sich das Einkaufsunterstützungsprogramm mit dem drahtlosen LAN des Ladens, und
nach Abschluss der Verbindung mit dem drahtlosen LAN in dem Laden, Anzeigen einer Schaltfläche, um den Benutzer anzuweisen, die zu kaufenden Artikel zu bestätigen, und einer Schaltfläche, um den Benutzer anzuweisen, den Einkauf zu beginnen.

4. Einkaufsunterstützungsvorrichtung nach einem der Ansprüche 1 bis 3, wobei
der Prozessor ferner konfiguriert ist, um die aus dem Ladeneingangscode für den Laden erfassten Einstellungsinformationen zu löschen, nachdem ein Ladenausgangscode für den Laden von der Kamera erfasst wurde.

5. Einkaufsunterstützungsvorrichtung nach einem der Ansprüche 1 bis 4, wobei der Ladeneingangscode ein zweidimensionaler Code ist.

6. Einkaufsunterstützungsvorrichtung nach einem der Ansprüche 1 bis 5, wobei das Einkaufsunterstützungsprogramm eine mobile Abrechnung bereitstellt.

7. Einkaufsunterstützungssystem, das in einer Vielzahl von verschiedenen Läden bereitgestellt werden soll, das System umfassend:
einen Ladeneingangscode, der an einem Eingang von jedem Laden in einer Vielzahl von verschiedenen Läden angebracht ist, wobei jeder Ladeneingangscode unterschiedliche Einstellungsinformationen für den jeweiligen Laden kodiert.
eine Einkaufsunterstützungsvorrichtung nach einem der Ansprüche 1 bis 6.

8. Einkaufsunterstützungssystem nach Anspruch 7, wobei das Einkaufsunterstützungsprogramm eine mobile Abrechnung für mindestens einige der mehreren verschiedenen Läden bereitstellt.

9. Einkaufsunterstützungssystem nach Anspruch 7 oder 8, wobei die Einkaufsunterstützungsvorrichtung ferner ein Einkaufslistenerstellungsprogramm beinhaltet, das konfiguriert ist, um die geplanten Kaufwareninformationen zu erstellen.

10. Nicht-transitorisches computerlesbares Speichermedium, das Programmanweisungen speichert, die, wenn sie von einem Prozessor einer Einkaufsunterstützungsvorrichtung ausgeführt werden, die Einkaufsunterstützungsvorrichtung veranlassen, ein Verfahren durchzuführen, umfassend:
Erfassen eines Ladeneingangscodes und von in dem Ladeneingangscode kodierten Einstellungsinformationen für einen Laden unter Verwendung einer Kamera; und
Ausführen eines Einkaufsunterstützungsprogramms gemäß den durch Decodieren des Ladeneingangscodes erfassten Einstellungsinformationen, und
Führen eines Kunden zu einem Verkaufsstandort für eine geplante Kaufware in dem Laden, wobei die geplante Kaufware in den in der Einkaufsunterstützungsvorrichtung gespeicherten Informationen über die geplante Kaufware aufgeführt ist, das Verfahren ferner umfassend:
Empfangen eines Bakensignals, wobei das Bakensignal Informationen zum Spezifizieren eines Standorts einer entsprechenden Bakensignal-Übertragungsquelle beinhaltet,
Identifizieren eines aktuellen Standorts der Einkaufsunterstützungsvorrichtung in dem Ladeneingangscode basierend auf den Informationen, die in dem Bakensignal beinhaltet sind, wobei
das Einkaufsunterstützungsprogramm zu Folgendem konfiguriert ist
Anzeigen einer Schaltfläche, die konfiguriert ist, um den Anmeldevorgangabschluss zu bestätigen, und eine Einkaufsbeginn-Schaltfläche,
Führen zu dem Verkaufsstandort der geplanten Kaufware basierend auf dem aktuellen Standort der Einkaufsunterstützungsvorrichtung,
Anzeigen, in einem angezeigten (SCf) Ladenkartenbild, das den Ladenkartendaten entspricht, einer Standortmarkierung anzuzeigen, die dem aktuellen Standort entspricht,
Anzeigen, in einem Bereich außerhalb des Ladenkartenbilds, eines Anzeigebereichs (ARc, ARd, ARe), der einen Warennamen anzeigt,
wenn die Einkaufsbeginn-Schaltfläche betätigt wird, Anzeigen eines Bildschirms mit registrierten Produkten, wobei die registrierten Produkte Strichcodes beinhalten, die von der Kamera (45) erfasst werden.

11. Nicht-transitorisches computerlesbares Speichermedium nach Anspruch 10, wobei das Einkaufsunterstützungsprogramm eine mobile Abrechnung bereitstellt.

12. Nicht-transitorisches computerlesbares Speichermedium nach Anspruch 10 oder 11, wobei
die aus dem Decodieren des Ladeneingangscodes erfassten Einstellungsinformation einen Parameter zum Kommunizieren mit einem Server des Ladens beinhaltet.

13. Nicht-transitorisches computerlesbares Speichermedium nach einem der Ansprüche 10 bis 12, das Verfahren ferner umfassend:
Löschen der Einstellungsinformationen, die aus dem Ladeneingangscode für den Laden erfasst werden, nachdem ein Ladenausgangscode für den Laden von der Kamera erfasst wurde.

## Revendications

1. Appareil d'aide aux achats (40), comprenant :
une mémoire (43) destinée à stocker des informations de marchandises d'achat planifiées et un programme d'aide aux achats pouvant être utilisés dans une pluralité de magasins différents, chaque magasin ayant des informations de configuration différentes pour le programme d'aide aux achats ;
une caméra (45) configurée pour acquérir un code d'entrée de magasin et des informations de configuration codées dans le code d'entrée de magasin pour un magasin ; et
un processeur (41) configuré pour exécuter le programme d'aide aux achats en fonction des informations de configuration acquises à partir du décodage du code d'entrée de magasin, dans lequel
le programme d'aide aux achats est configuré pour fournir une fonction guidant un client vers un emplacement de vente d'une marchandise d'achat planifiée dans le magasin, la marchandise d'achat planifiée étant répertoriée dans les informations de marchandises d'achat planifiées stockées ;
dans lequel
l'appareil d'aide aux achats comprend en outre un circuit de réception de signal (47) configuré pour recevoir un signal de balise, le signal de balise comprenant des informations permettant de spécifier l'emplacement d'une source d'émission de signal de balise correspondante,
le processeur est en outre configuré pour identifier l'emplacement actuel de l'appareil d'aide aux achats dans le magasin sur la base des informations incluses dans le signal de balise,
dans lequel
le programme d'aide aux achats est configuré pour :
afficher un bouton configuré pour confirmer l'achèvement de la vérification et un bouton pour commencer les achats,
guider vers l'emplacement de vente de la marchandise d'achat planifiée en fonction de l'emplacement actuel de l'appareil d'aide aux achats,
afficher, dans une image de carte en magasin (SCf) affichée correspondant à des données de carte en magasin, une marque d'emplacement correspondant à l'emplacement actuel,
afficher, dans une zone excluant l'image de carte en magasin, une zone d'affichage (ARc, ARd, ARe) affichant un nom de marchandise,
lorsque le bouton permettant de commencer les achats est actionné, afficher un écran de produits enregistrés, les produits enregistrés comprenant des codes-barres acquis par la caméra (45).

2. Appareil d'aide aux achats selon la revendication 1, dans lequel
lorsque le programme d'aide aux achats est exécuté conformément aux informations de configuration acquises à partir du décodage du code d'entrée de magasin, le programme d'aide aux achats fournit une notification indiquant qu'une marchandise d'achat planifiée n'est actuellement pas disponible en magasin.

3. Appareil d'aide aux achats selon l'une quelconque des revendications 1 à 2, dans lequel
les informations de configuration acquises à partir du décodage du code d'entrée de magasin comprennent un paramètre pour un seuil de vérification de batterie,
un paramètre pour se connecter à un réseau local, LAN, sans fil en magasin,
un paramètre pour communiquer avec le réseau LAN sans fil en magasin,
dans lequel le programme d'aide aux achats est configuré pour,
lorsque le niveau de batterie restant de l'appareil d'aide aux achats est supérieur au seuil de vérification de batterie, le programme d'aide aux achats se connecte au réseau LAN sans fil en magasin, et
une fois la connexion au réseau LAN sans fil en magasin établie, afficher un bouton destiné à donner instruction à l'utilisateur de confirmer les articles à acheter et un bouton destiné à donner instruction à l'utilisateur de commencer ses achats.

4. Appareil d'aide aux achats selon l'une quelconque des revendications 1 à 3, dans lequel
le processeur est en outre configuré pour effacer les informations de configuration acquises à partir du code d'entrée de magasin pour le magasin après qu'un code de sortie de magasin pour le magasin a été acquis par la caméra.

5. Appareil d'aide aux achats selon l'une quelconque des revendications 1 à 4, dans lequel le code d'entrée de magasin est un code bidimensionnel.

6. Appareil d'aide aux achats selon l'une quelconque des revendications 1 à 5, dans lequel le programme d'aide aux achats permet un règlement mobile.

7. Système d'aide aux achats destiné à être fourni dans une pluralité de magasins différents, le système comprenant :
un code d'entrée de magasin affiché à l'entrée de chaque magasin parmi une pluralité de magasins différents, chaque code d'entrée de magasin codant des informations de configuration différentes pour le magasin respectif ; et
un appareil d'aide aux achats selon l'une quelconque des revendications 1 à 6.

8. Système d'aide aux achats selon la revendication 7, dans lequel le programme d'aide aux achats permet un règlement mobile pour au moins certains des différents magasins.

9. Système d'aide aux achats selon la revendication 7 ou 8, dans lequel l'appareil d'aide aux achats comprend en outre un programme de génération de liste d'achats configuré pour générer les informations de marchandises d'achat planifiées.

10. Support de stockage non transitoire lisible par ordinateur stockant des instructions de programme qui, lorsqu'elles sont exécutées par un processeur d'un appareil d'aide aux achats, amènent l'appareil d'aide aux achats à mettre en œuvre un procédé comprenant le fait de :
acquérir un code d'entrée de magasin et des informations de configuration codées dans le code d'entrée de magasin pour un magasin à l'aide d'une caméra ; et
exécuter un programme d'aide aux achats selon les informations de configuration acquises à partir du décodage du code d'entrée de magasin, et
guider un client vers un emplacement de vente d'une marchandise d'achat planifiée dans le magasin, la marchandise d'achat planifiée étant répertoriée dans des informations de marchandises d'achat planifiées stockées dans l'appareil d'aide aux achats, le procédé comprenant en outre le fait de :
recevoir un signal de balise, le signal de balise comprenant des informations permettant de spécifier l'emplacement d'une source d'émission de signal de balise correspondante
identifier l'emplacement actuel de l'appareil d'aide aux achats dans le magasin sur la base des informations incluses dans le signal de balise, dans lequel
le programme d'aide aux achats est configuré pour :
afficher un bouton configuré pour confirmer l'achèvement de la vérification et un bouton pour commencer les achats,
guider vers l'emplacement de vente de la marchandise d'achat planifiée en fonction de l'emplacement actuel de l'appareil d'aide aux achats,
afficher, dans une image de carte en magasin (SCf) affichée correspondant à des données de carte en magasin, une marque d'emplacement correspondant à l'emplacement actuel,
afficher, dans une zone excluant l'image de carte en magasin, une zone d'affichage (ARc, ARd, ARe) affichant un nom de marchandise,
lorsque le bouton permettant de commencer les achats est actionné, afficher un écran de produits enregistrés, les produits enregistrés comprenant des codes-barres acquis par la caméra (45).

11. Support de stockage non transitoire lisible par ordinateur selon la revendication 10, dans lequel le programme d'aide aux achats permet un règlement mobile.

12. Support de stockage non transitoire lisible par ordinateur selon la revendication 10 ou 11, dans lequel
les informations de configuration acquises à partir du décodage du code d'entrée de magasin comprennent un paramètre pour communiquer avec un serveur du magasin.

13. Support de stockage non transitoire lisible par ordinateur selon l'une quelconque des revendications 10 à 12, dans lequel le procédé comprend en outre le fait de :
effacer les informations de configuration acquises à partir du code d'entrée de magasin pour le magasin après qu'un code de sortie de magasin pour le magasin a été acquis par la caméra.
